# EUROPÄISCHE PATENTSCHRIFT

(11) **EP 3 213 807 B1**
(45) Veröffentlichungstag und Bekanntmachung des Hinweises auf die Patenterteilung: **30.03.2022**
(21) Anmeldenummer: 17000218.2
(22) Anmeldetag: 11.02.2017
(51) Int. Cl.: B01D 53/04, B01J 20/20, B01J 20/28, B01J 20/34

(54) **VORRICHTUNG UND VERFAHREN ZUM BEHANDELN EINES MIT SCHADSTOFFEN BELASTETEN GASES**
DEVICE AND METHOD FOR TREATING A GAS CONTAMINATED WITH POLLUTANTS
DISPOSITIF ET PROCÉDÉ DE TRAITEMENT D'UN GAZ CHARGÉ DE SUBSTANCES NOCIVES

(30) Priorität: 15.02.2016 DE 102016001674; 28.01.2017 DE 102017001114
(43) Veröffentlichungstag der Anmeldung: 06.09.2017
(73) Patentinhaber: SILICA Verfahrenstechnik GmbH, 13509 Berlin (DE)
(72) Erfinder: Hartbrich, Andreas, 13467 Berlin (DE); Höhne, Gerd, 13467 Berlin (DE); Schlicht, Burkhard, 12621 Berlin (DE); Möllmer, Jens, D - 04435 Schkeuditz (DE); Wecks, Mike, D - 04249 Leipzig (DE); Hofmann, Jörg, D - 04319 Leipzig (DE)
(74) Vertreter: Cohausz Hannig Borkowski Wißgott

(56) Entgegenhaltungen:
- EP-B1- 1 284 805
- DE-A1- 19 613 326
- DE-C2- 4 104 513

## Beschreibung

Die Erfindung betrifft eine Vorrichtung zum Behandeln eines mit Schadstoffen belasteten Gases mit mindestens einem in einem Adsorptionsapparat eingesetzten, Adsorptionsmodul zum Adsorbieren der Schadstoffe, wobei das Adsorptionsmodul einen mit Gaseintrittsöffnungen versehenen inneren zylindrischen Hohlkörper aus einem elektrisch leitfähigen Material, einen mit Gasaustrittsöffnungen versehenen äußeren zylindrischen Hohlkörper aus einem elektrisch leitfähigen Material und eine elektrisch leitfähige Aktivkohlefaserwicklung umfasst, die um den inneren Hohlköroper angeordnet und vom äußeren Hohlkörper umschlossen ist, mit einem elektrischen Stromkreis zum Aufheizen der Aktivkohlefaserwicklung für das Desorbieren der adsorbierten Schadstoffe, der zwischen innerem und äußerem Hohlkörper gebildet ist, wobei der innere und äußere Hohlkörper voneinander elektrisch isoliert und an eine Spannungsquelle angeschlossen sind und das unbehandelte Gas aus dem vom inneren Hohlkörper definierten Behandlungsabschnitt von innen nach außen durch die Aktivkohlefaserwicklung strömt, und mit einem Austrittsöffnungen aufweisenden Verteilrohr für ein Spülgas zum Inertisieren und Spülen der Aktivkohlefaserwicklung, wobei das Verteilrohr entlang der Längsachse des Aktivkohlefasermoduls in den Behandlungsabschnitt bis nahe dem Bodenblech des Aktivkohlefasermoduls geführt und an seinem Ende verschlossen ist.

Die Erfindung betrifft weiterhin ein Verfahren zum Behandeln eines mit Schadstoffen belasteten Gases, bei dem mindestens ein innerhalb eines Adsorptionsapparates angeordnetes Adsorptionsmodul, das einen mit Gaseintrittsöffnungen versehenen inneren zylindrischen Hohlkörper aus elektrisch leitfähigem Material, einen mit Gasaustrittsöffnungen versehenen äußeren Hohlkörper aus elektrisch leitfähigem Material und eine elektrisch leitfähige Aktivkohlefaserwicklung umfasst, mit dem Gas beaufschlagt und das Gas aus dem vom inneren Hohlkörper definierten Behandlungsabschnitt über die axiale Länge des Moduls verteilt und von innen nach außen durch die Aktivkohlefaserwicklung geleitet wird, wobei die Adsorption der Schadstoffe an den Aktivkohlefasern der Aktivkohlefaserwicklung erfolgt, anschließend die Regeneration der Aktivkohlefasern nach ihrer Beladung mit Schadstoffen mittels Aufheizen der Aktivkohlefasern durch Hindurchleiten eines elektrischen Stromes und nachfolgendem Ausspülen der Schadstoffe aus den Aktivkohlefasern mit einem inerten Spülgas durchgeführt wird.

### Stand der Technik

Schadstoffe in Gasen an Aktivkohle zu adsorbieren und diese für einen neuen Adsorptionsvorgang zu regenerieren, gehören seit langem zum Stand der Technik. Zum Einsatz kommen hauptsächlich Aktivkohlen in Form von Schüttungen aus Granulaten in Festbetten oder auch Aktivkohlefasern, die als Vliese, Gewebe oder Gestricke vorliegen.

Aus der DE 100 32 385 A1 ist ein Verfahren zur Regenerierung von mit organischen Substanzen beladenen, elektrisch leitenden Adsorbentien bekannt, die durch Durchleitung von elektrischem Strom aufgeheizt werden. Das Adsorbens wird abwechselnd zeitlich nacheinander durch Durchleitung von elektrischem Strom aufgeheizt, wobei kein Spülgas durch das Adsorbens geführt wird und anschließend bei abgestelltem elektrischen Strom ein Spülgas durch das Adsorbens geleitet wird, wodurch gleichzeitig die adsorbierten organischen Substanzen ausgetrieben werden und das Adsorbens gekühlt wird.

Zum Stand der Technik gehört auch ein Verfahren zur Adsorption und Rückgewinnung mit einer Adsorptionseinheit, die mindestens ein Aktiv-Carbonfaserelement umfasst, wobei das Aktiv-Carbonfaserelement durch Stromfluss erwärmt wird (EP 1 284 805 B1). Das Aktiv-Carbonfaserelement ist so ausgebildet, dass es einen ausreichend elektrischen Widerstand für die Erwärmung bildet. Eine Gasströmung wird in das erwärmte Aktiv-Carbonfaserelement geleitet, um wahlweise mindestens einen Bestandteil der Gasströmung zu adsorbieren. Durch die Steuerung oder Regelung der Temperatur des Aktiv-Carbonfaserelementes mit elektrischem Stromfluss auf eine Temperatur für die Desorption wird ein adsorbierter Bestandteil in Gegenwart einer Inertgasströmung desorbiert. Das Adsorptionssystem für das Verfahren umfasst ein hohles Gehäuse, in dem mindestens ein längliches ringförmiges Aktiv-Carbonfaserelement angeordnet ist, welches ein ausreichendes Verhältnis von der Länge zum Querschnitt aufweist, um einen elektrischen Widerstand zum Erwärmen und eine elektrische Verbindung zum Aktiv-Carbonfaserelement und Gasanschlüsse für den Eintritt und Austritt des Gases zu und aus dem hohlen Gehäuse zu erreichen, wobei die Gasanschlüsse so angeordnet sind, dass das Gas in das hohle Aktiv-Carbonfaserelement gelenkt wird, dort eindringt und durch das Volumen fließt.

Weiterhin ist aus der EP 0 532 814 B1 eine Vorrichtung zur Behandlung eines Fluids mit mindestens einem darin enthaltenen Bestandteil bekannt. Diese bekannte Vorrichtung hat eine Struktur aus einem adsorbierenden Material zum Durchfluss des Fluids, um den adsorbierbaren Bestandteil durch das adsorbierende Material zu adsorbieren, wobei die Struktur in einem Reaktionsbehälter angeordnet ist. Die Vorrichtung umfasst Mittel zur periodischen Regeneration des adsorbierenden Materials mittels des Joule-Thomson-Effektes, wobei die Mittel zur Wechselwirkung mit der Struktur im Verlauf einer Desorptionsphase dienen, die darin
besteht, dass ein elektrischer Strom in mindestens einer der Schichten der Struktur hindurchfließt. Die Struktur besteht aus übereinander zick-zack-förmig geschichteten Lagen vernetzter elektrisch leitender Aktivkohle, die durch das Ausziehen von elektrisch leitenden Fasern erhalten wird. Die Lagen haben einen Abstand voneinander, um Turbulenzen beim Durchströmen des zu behandelnden Fluides zu erzeugen. Der elektrische Strom durchfließt die Fasern in Faserrichtung (Längserstreckung), in dem die Potentialdifferenz an den Enden der Lagen aus Aktivkohle oder an den Enden jeder Lage angelegt wird. Das zu behandelnde Gas wird durch ein perforiertes Rohr in die um das Rohr gewickelte Lage zugeführt.

Des Weiteren ist aus der DE 41 04 513 C2 ein Adsorber aus absorbierenden Material bekannt, das elektrisch leitfähig ist und mittels elektrischem Strom auf eine Temperatur erwärmt werden kann, bei der das adsorbierende Material ausgetrieben wird. Als adsorbierendes, elektrisch leitfähiges Material wird gepresste oder faserförmige Aktivkohle verwendet, die in Form von Rohren, Hohlfasern oder Matten vorliegt, die von dem schadstoffbeladenen Fluid durchströmbar sind. Die Rohre, Hohlfasern oder Matten werden zwischen zwei Elektroden an ihren Stirnseiten eingespannt und vom Strom in ihrer Längsrichtung durchflossen.

Aus der US 4 737 164 A ist ein Verfahren zur Rückgewinnung von flüchtigen Verunreinigungen aus Gasen bekannt, bei dem das Gas durch ein um sich selbst aufgewickelte Aktivkohlefasergewebe durchströmt, welches zur Erhöhung seine Adsorptionsfähigkeit und zur Desorption durch einen Gleichstrom erwärmt wird. Das aufgewickelte Aktivkohlefasergewebe wird an seiner Stirnseite mit einer Elektrode verbunden, die an die Gleichspannungsquelle angeschlossen ist.
Des Weiteren ist aus der DE 698 27 676 T2 ein elektrisch regenerierbares Luftfiltermedium bekannt, das beinhaltet:
(A) ein elektrisch leitfähiges Filtermedium bestehend aus einem Molekularsieb aus Karbonfaserverbund zur Adsorption von Verunreinigungen aus einem nicht annehmbaren einströmenden Luftstrom, welches das Ausströmen eines annehmbaren Luftstroms gestattet, wobei das Filtermedium aus einem Molekularsieb aus Karbonfaserverbund ein aktiviertes Karbonfaserverbundmaterial ist, das ferner eine Vielzahl von porösen Karbonfasern beinhaltet, die mit einem karbonisierbaren organischen Bindemittel in einer offenen durchlässigen Struktur gebunden sind und wobei das Verbundmaterial vor der Aktivierung eine Porosität im Bereich von annähernd 82-86% und eine Oberfläche von mehr als 1000 m²/g aufweist und
(B) ein aus einem Generator für elektrischen Strom bestehendes Regenerierungsmittel, welches das Filtermedium mit elektrischem Strom durchfließt, um die adsorbierten Verunreinigungen aus dem Filtermedium zu desorbieren und
(C) ein Einschließungsmittel, um die die desorbierten Verunreinigungen von der annehmbaren Luft wegzuleiten. Alle diese bekannten Lösungen haben den Nachteil, dass die Aktivkohlefasern entlang ihrer Längserstreckung (Faserachsen) mit elektrischem Strom beaufschlagt werden, wodurch eine ungleichmäßige Erwärmung der Aktivkohlefasern über ihre axiale Länge im Adsorbermodul hervorgerufen wird, so dass die Desorption der Schadstoffe von den Aktivkohlefasern beeinträchtigt wird und sogar unvollständig bleiben kann.

Adsorbermodule mit Matten, Hohlfasern oder Rohren aus Aktivkohlefasern mit elektrischer Regeneration haben sich deshalb bisher nicht durchsetzen können.

Darüber hinaus verursachen diese Adsorbermodule mit Hohlfasern, Rohren oder gewickelten Matten aus Aktivkohlefasern eine unterschiedliche Druckverteilung des Gases über ihre axiale Länge, was zu einem ungleichmäßigen Strömungsprofil führt und eine ungleichmäßige Beladung mit Gebieten lokaler Sättigung bewirkt, so dass ein schlechtes Verhältnis zwischen vorhandener und tatsächlich durchströmter Adsorberoberfläche folgt.

Außerdem entstehen beim Durchströmen der Matten, Hohlfasern und Rohre aus Aktivkohlefasern mit dem schadstoffbeladenen Gas elektrostatische Aufladungen, die die Gefahr mit sich bringen, dass unkontrollierten Stromschläge und Entladungen zu Bränden führen können und die Sicherheit der Adsorptionsanlage gefährden.

Des Weiteren besitzen die Hohlfasern, Rohre und gewickelten Matten aus Aktivkohlefasern keine ausreichende mechanische Stabilität, sind montageunfreundlich bei der Wartung und dem Austausch. Die bekannten Adsorbermodule neigen deshalb zur Störanfälligkeit, haben einen nicht befriedigenden Wirkungsgrad und sind dadurch letztendlich unwirtschaftlich.

Außerdem ist aus der DE 196 13 326 A1 eine Vorrichtung zur Rückgewinnung von organischen Lösungsmitteln bekannt, die einen Siedepunkt unterhalb von 250 °C aufweisen, aus dem Abluftstrom einer Betriebsanlage, bestehend aus einem Adsorber mit einem ringförmigen, mit Aktivkohle gefüllten, elektrisch aufheizbaren Festbett, welches zur Adsorption des Lösemittels zunächst von dem Abluftstrom und anschließend zur Desorption bzw. Regenerierung mit Vakuum und/oder einem Gas beaufschlagt wird, wobei der äußere und innere Mantel des ringförmigen Festbettes aus einem die Elektroden bildenden Gittermetall besteht.

### Aufgabenstellung

Bei diesem Stand der Technik liegt der Erfindung die Aufgabe zugrunde, eine Vorrichtung und ein Verfahren zum Behandeln eines mit Schadstoffen belasteten Gases bereitzustellen, mit der die Aktivkohlefaserwicklungen gleichmäßig über ihre axiale Länge im Modul auf Desorptionstemperatur erhitzt werden können, eine gleichmäßige Druckverteilung bei ihrer radialen Durchströmung mit dem Gas erreicht wird, die mechanische Stabilität der Aktivkohlefaserwicklungen bei gleichzeitiger Verbesserung des Wirkungsgrades, der Sicherheit und Wirtschaftlichkeit erhöht wird.

Diese Aufgabe wird durch eine Vorrichtung der eingangs genannten Art mit den Merkmalen des Anspruches 1 und durch ein Verfahren mit den Merkmalen des Anspruchs 15 gelöst.

Vorteilhafte Ausgestaltungen der erfindungsgemäßen Vorrichtung und des Verfahrens sind den Unteransprüchen entnehmbar.

Die erfindungsgemäße Lösung geht von der Erkenntnis aus, die Aktivkohlefaserwicklung quer zur ihrer Längserstreckung mit elektrischem Strom zu beaufschlagen, um eine gleichmäßige Erwärmung über die axiale Länge des Moduls zu erreichen, und die Richtung des elektrischen Stromflusses mit der Richtung der Gasströmung von innen nach außen in Übereinstimmung zu bringen, wobei gleichzeitig eine gleichmäßige Druckverteilung bei der Durchströmung zu gewährleisten ist, um die Aktivkohlefaserwicklung gleichmäßig zu beladen und zu desorbieren.

Dies wird dadurch erreicht, dass die Aktivkohlefaserwicklung in einem radial zusammengedrückten dichten elektrisch leitfähigen Zustand durch radiale Kompression gehalten ist, in dem die komprimierte Aktivkohlefaserwicklung quer zu ihrer Längserstreckung vom Strom durchflossen und als Widerstand geschaltet ist, wobei zur radialen Kompression der Aktivkohlefaserwicklung der äußere Hohlkörper einen Innendurchmesser aufweist, der gegenüber dem Außendurchmesser der Aktivkohlefaserwicklung um das 0,01 bis 0,4-fache geringer ist, und dass für den freien Gasdurchtritt quer zur Längsachse des inneren Hohlkörpers die Gaseintrittsöffnungen gleichmäßiq über den Mantel des inneren zylindrischen Hohlkörpers verteilt sind, wobei die Gaseintrittsöffnungen einem Durchströmungsquerschnitt von 5 bis 80% der Fläche des Mantels des Hohlkörpers entsprechen, und dass für den freien Gasaustritt quer zur Längsachse des äußeren zylindrischen Hohlkörpers die Gasaustrittsöffnungen gleichmäßig über den Mantel des äußeren zylindrischen Hohlkörpers verteilt sind, wobei die Gasaustrittsöffnungen einem Durchströmungsquerschnitt von 50 bis 95% der Fläche des Mantels des Hohlkörpers entsprechen.

In einer vorteilhaften Ausführungsform der erfindungsgemäßen Vorrichtung kann der innere und äußere Hohlkörper aus einem dünnen metallischen schlitz-, sieb-, lochblech- oder gitterartigen Material bestehen, das in Abhängigkeit der an den Aktivkohlefasern adsorbierten Schadstoffe aus der Gruppe Kupfer, Aluminium und deren Legierungen, Eisen oder unlegierte Stähle, Edelstähle, Nickelbasislegierungen, Titan bzw. Titanlegierungen ausgewählt ist.

Nach einer weiteren bevorzugten Ausgestaltung der erfindungsgemäßen Vorrichtung ist vorgesehen, dass der innere und äußere Hohlkörper des Moduls elektrisch nichtleitend an einem Halter oder Aufnahmeboden im Adsorptionsapparat befestigt sind. Dies stellt sicher, dass die innere und äußere Lage oder der innere und äußere Hohlkörper voneinander elektrisch isoliert sind.

Von besonderer Bedeutung ist, dass der innere Hohlkörper einen Anschluss für den Pluspol oder Minuspol und der äußere Hohlkörper einen Anschluss für den Minuspol oder Pluspol der Spannungsquelle aufweist, wobei die Spannungsquelle eine Gleichspannungsquelle ist, deren Potentialdifferenz zwischen dem Minuspol und dem Pluspol in Abhängigkeit der Dicke der Aktivkohlefaserwicklung und der Desorptionstemperatur der adsorbierten Schadstoffe an den Aktivkohlefasern zwischen 10 und 400 V gewählt ist.

Der innere und äußere Hohlkörper kann aber auch Anschlüsse für eine Wechselstromquelle aufweisen, deren Spannung und Frequenz in Abhängigkeit der Dicke der Aktivkohlefasermatte oder Aktivkohlefaserwicklung und der Desorptionstemperatur der adsorbierten Schadstoffe gewählt ist.

Durch die Art der Aktivkohlefaserwicklungen können die erfindungsgemäßen Module an unterschiedliche Schadstoffe, wie unpolare Stoffe wie z.B. Aromaten, Ester, ParaffinKohlenwasserstoffe, Halogen-Kohlenwasserstoffe usw., leicht angepasst werden.

In der erfindungsgemäßen Vorrichtung hat der äußere Hohlkörper zur radialen Kompression der Aktivkohlefaserwicklung einen Innendurchmesser, der gegenüber dem Außendurchmesser der gewickelten Lage der Aktivkohlefasermatte um das 0,01- bis 0,4-fache geringer ist. Dies ermöglicht, die Aktivkohlefaserwicklung in einem dichten elektrisch leitfähigen Zustand zu halten, ohne dass wesentliche Hohlräume zwischen den Wickellagen auftreten.

Von Vorteil ist weiterhin, dass die Anschlüsse mit der Gleich- oder Wechselstromquelle über freitragende, durch ein Bodenblech des inneren Hohlkörpers des Aktivkohlefasermoduls sowie dem Behältermantel des Adsorptionsapparates gas- und druckdicht und elektrisch isoliert geführte Verbindungsleitungen verbunden sind, die beim Durchströmen des schadstoffbeladenen Gases während der Adsorption der Schadstoffe an den Aktivkohlefasern mit der Erdung des Adsorptionsapparats zum Ableiten einer elektrostatischen Aufladung über Schalter zugeschaltet und die bei der Desorption der adsorbierten Schadstoffe durch die Schalter von der Erdung elektrisch getrennt sind. Dies ist zweckmäßig, um das erfindungsgemäße Modul gegen elektrostatische Aufladungen, Überschläge bis hin zu Bränden zu sichern.

In einer weiteren bevorzugten Ausführungsform der Erfindung kann der äußere Hohlkörper des Aktivkohlefasermoduls von einem Induktor zum Erzeugen eines hochfrequenten Magnetfeldes zum Erwärmen der Aktivkohlefaserwicklung umschlossen sein, der an die Wechselstromquelle angeschlossen ist.

Von besonderer Bedeutung für die Adsorptionskapazität ist, dass die Aktivkohlefaserwicklung aus einem Aktivkohlefaser-Gewebe mit einem Faserdurchmesser von 6 bis 50 µm, einer Faserlänge von 3 bis 150 mm und aus 3 bis 300 Lagen gebildet ist. Dadurch, dass die Gasströmung während der Adsorption und Desorption von innen nach außen übereinstimmt, wird die Adsorptionsoberfläche während der Adsorption und Desorption besser ausgenutzt, die Desorption durch die gleichmäßigere Erwärmung vollständiger und effizienter. Es hat sich gezeigt, dass die große Anzahl von Mikroporen der Aktivkohlefasern zu einer deutlichen Erhöhung der Stoffübergangsgeschwindigkeit führt, so dass nur wenige Lagen des Aktivkohlefasergewebes notwendig sind, um eine große Adsorptionskapazität bei geringen Partialdrücken des zu behandelnden Gases zu erreichen.

In einer weiteren bevorzugten Ausführungsform der Erfindung ist vorgesehen, dass das Aktivkohlefasermodul eine axiale Länge aufweist, die einer Konfektionsbreite der handelsüblichen Aktivkohlefaser-Gewebe entspricht, wodurch es möglich ist, das Aktivkohlefaser-Gewebe ohne bedeutenden Verschnitt auszunutzen.
Es können, ohne die Erfindung zu verlassen, mehrere, konfektionsbreite Wicklungen aneinandergefügt werden, die an ihren Stoßkanten durch ein Streifenband eine unkontrollierte, ungleichmäßige Gasströmung verhindert, welche zusammen eine axiale Länge aufweisen, die dem Produkt aus Konfektionsbreite und der Anzahl der aneinandergefügten konfektionsbreiten Wicklungen entspricht. So lassen sich Aktivkohlefasermodule mit unterschiedlichen axialen Längen entsprechend des jeweilig vorliegenden Anwendungsfalles bereitstellen.
Bei kleinen Konfektionsbreiten des Aktivkohlefasergewebes (kleiner 200mm) können die Aktivkohlefasermodule mit unterschiedlichen axialen Längen wie eine Filterkerze mit mindestens zwei, vorzugsweise drei bis acht Lagen, über Kreuz um den inneren Hohlkörper gewickelter Lagen aus Aktivkohlefasern versehen werden.

Vorteilhaft ist weiterhin, dass die zwischen den Hohlkörpern gehaltene Aktivkohlefasermatte ausgetauscht werden kann, so dass das Aktivkohlefasermodul, wenn erforderlich, mit einer neuen Aktivkohlefaserwicklung bestückbar ist.

Hieraus ergibt sich die Möglichkeit, das Aktivkohlefasermodul auf eine andere Aktivkohlefaserwicklung sowohl hinsichtlich des Faserdurchmessers als auch ihrer spezifischen Adsorptionsoberfläche umzustellen.

In weiterer bevorzugter Ausgestaltung der Erfindung ist das Verteilrohr für das Spülgas auf der Längsachse des Aktivkohlefasermoduls angeordnet, so dass das Spülgas durch die Austrittsöffnungen im Verteilrohr gleichmäßig über die axiale Länge des Aktivkohlefasermoduls verteilt auf den inneren Hohlkörper gelenkt werden kann, um die Aktivkohlefaserwicklung gleichmäßig mit Spülgas zu beaufschlagen und die desorbierten Schadstoffe aus dem Modul auszutragen.

Nach einer besonders bevorzugten Ausführungsform der Erfindung sind mehrere Aktivkohlefasermodule in Dreiecks- oder Vierecksteilung an einem senkrecht zur Apparateachse ausgerichteten, im Adsorptionsapparat gas- und druckdicht sowie elektrisch nicht leitend befestigten Aufnahmeboden gehalten, wobei die inneren und äußeren Hohlkörper der Aktivkohlefasermodule voneinander elektrisch isoliert sind und jeder innere Hohlkörper jeweils einen Behandlungsabschnitt einschließt, in welchem jeweils das Verteilrohr entlang der Längsachse bis nahe dem Bodenblech des Aktivkohlefasermoduls geführt ist.

Der gesamte Adsorptionsapparat kann mit den entsprechenden Modulen horizontal oder vertikal ausgeführt sein. Ohne die Erfindung zu verlasen, ist es weiterhin bei sehr großen Gasdurchsätzen und von der Länge begrenzten Aktivkohlefasermodulen möglich, die Module zueinander spiegelbildlich im Adsorptionsapparat zu installieren, wobei der Rohgaseintritt axial an beiden Stirnseiten des Adsorptionsapparates erfolgt und der Gasaustritt des gereinigten Gases in der Mitte des Adsorptionsapparats, vorzugsweise mit zwei sich gegenüberliegenden Gasaustrittsstutzen durchgeführt wird und der Austrittsstutzen für das Desorbat am Behältermantel des Adsorptionsapparats angeordnet ist.

Die Aufgabe der Erfindung wird weiterhin durch ein Verfahren zum Behandeln eines mit Schadstoffen belasteten Gasen in einer oben definierten Vorrichtung,das Verfahren mit folgenden Schritten gelöst:
a) radiales Leiten des Gases durch die Aktivkohlefaserwicklung, die im zusammengedrückten elektrisch leitfähigen Zustand quer zu ihrer Längserstreckung mittels einer radialen Kompression der Aktivkohlefaserwicklung durch Aufschieben des äußeren Hohlkörpers auf die den inneren Hohlkörper umschließende Aktivkohlefaserwicklung gehalten wird, wobei für den freien Gasdurchtritt die Gaseintrittsöffnungen des inneren Hohlkörpers einen Durchströmungsquerschnitt von 5 bis 50% der Fläche des Mantels des inneren Hohlkörpers und die Gasaustrittsöffnungen des äußeren Hohlkörpers einen Durchströmungsquerschnitt von 50 bis 95% der Fläche des Mantels des äußeren Hohlkörpers aufweisen,
b) Bilden des Stromkreises zwischen dem inneren und äußeren Hohlkörper sowie der komprimierten Aktivkohlefaserwicklung, in dem die Aktivkohlefasern der Aktivkohlefaserwicklung beim Aufheizen zur Desorption der Schadstoffe vom Strom quer zu ihrer Längserstreckung radial von innen nach außen durchflossen werden und als Widerstand geschaltet sind.

In einer bevorzugten Ausführungsform des erfindungsgemäßen Verfahrens kann ein Aktivkohlefasermodul verwendet werden, das mit Gleichstrom oder niederfrequenten Wechselstrom beaufschlagt wird.

Nach einer weiteren bevorzugten Ausführungsform des erfindungsgemäßen Verfahrens wird das Aktivkohlefasermodul durch folgende Schritte hergestellt:
a) Rundbiegen und Fügen eines dünnen metallischen schlitz-, sieb-, lochblech- oder gitterartigen Materials zu einem inneren und einem äußeren zylinderförmigen Hohlkörper mit aufeinander abgestimmten unterschiedlichen Durchmessern,
b) Umwickeln des inneren Hohlkörpers mit mindestens einer Wickellage aus einer Aktivkohlefasermatte und deren Befestigung, wobei die Konfektionsbreite der Aktivkohlefasermatte die axiale Länge des Aktivkohlefasermoduls bestimmt,
c) radiales Komprimieren der Aktivkohlefaserwicklung durch ein axiales Aufschieben des äußeren Hohlkörpers auf die Aktivkohlefaserwicklung, wobei der äußere Hohlkörper einen Innendurchmesser aufweist, der gegenüber dem Außendurchmesser der Aktivkohlefaserwicklung um das 0,01-bis 0,4-fache geringer ist, so dass die Aktivkohlefaserwicklung radial zusammengedrückt und in einem dichten elektrisch leitfähigen Zustand auch in Querrichtung der Fasern gehalten ist.

Eine weitere vorteilhafte Ausführung des erfindungsgemäßen Verfahrens sieht vor, dass als dünnes metallisches Material für den inneren und äußeren Hohlkörper des Aktivkohlefasermoduls in Abhängigkeit der Art und Konzentration des Schadstoffes Kupfer, Aluminium, Magnesium und deren Legierungen, Eisen, unlegierte Stähle, Edelstähle, Nickelbasislegierungen, Titan bzw. Titanlegierungen verwendet wird.

In einer zweckmäßigen weiteren Ausgestaltung des erfindungsgemäßen Verfahrens wird der Adsorptionsapparat zur Inertisierung und anschließender Regeneration der mit Schadstoffen beladenen Aktivkohlefasern in den Modulen zunächst mit Stickstoff auf einen Überdruck von 0,1 bis 1,0 bar aufgedrückt und anschließend wieder entspannt, dann das Aufdrücken und Entspannen mehrfach wiederholt bis der Sauerstoffgehalt im Adsorptionsapparat auf <5% abgesunken ist, sodann wird das Modul zur Desorption der Schadstoffe von den Aktivkohlefasern mit einen Spülgas gespült und auf Desorptionstemperatur durch Einschalten des Stromkreises aufgeheizt, wobei das Spülen und Aufheizen auch in mehreren Intervallen durchgeführt werden kann.
Als Spülgas kommt inertes Gas, vorzugsweise Stickstoff, zur Anwendung.

Von Bedeutung für den Wirkungsgrad des erfindungsgemäßen Verfahrens ist es, dass es durch die elektrische Regeneration unwesentlich ist, ob die Strömungsrichtung der Ab- oder Desorption gleich oder entgegengesetzt ist. Dadurch, dass die Aktivkohlefaserwicklung nicht in ihrer Längsrichtung, sondern in Querrichtung durch den elektrischen Strom durchflossen wird, kann eine gleichmäßigere Aufheizung der Aktivkohlefaserwicklung erreicht werden. Mit anderen Worten, die Dicke und nicht die Länge der Aktivkohlefaserwicklung bestimmt den elektrischen Widerstand.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an mehreren Ausführungsbeispielen näher erläutert werden.

Es zeigen
Fig. 1 eine perspektivische Ansicht des Adsorptionsmoduls in der Ausführung einer nicht zur Erfindung gehörenden Sandwichplatte von der Gaseintrittsseite,
Fig. 2 eine perspektivische Ansicht des Adsorptionsmoduls in der Ausführung einer nicht zur Erfindung gehörenden Sandwichplatte von der Gasaustrittsseite,
Fig. 3 eine schematische Darstellung der Anordnung von aus Sandwichplatten zusammengesetzten nicht zur Erfindung gehörenden Adsorptionsmodulen in einem Adsorptionsapparat,
Fig. 4a und 4b Einzelheiten A und B der Befestigung und Isolation der nicht zur Erfindung gehörenden Sandwichplatten im Adsorptionsapparat,
Fig. 5 eine perspektivische Ansicht des erfindungsgemäßen Aktivkohlefasermoduls,
Fig. 6 einen Schnitt entlang der Linie A-A der Fig. 5,
Fig. 7 eine schematische Ansicht des Aktivkohlefasermoduls der erfindungsgemäßen Vorrichtung in Schnittdarstellung mit Isolierung und elektrischem Anschluss an eine Spannungsquelle,
Fig. 8a und 8b Einzelheiten C und D der Befestigung und Isolation der Hohlkörper des Aktivkohlefasermoduls im Adsorptionsapparat,
Fig. 9 eine schematische Darstellung der Anordnung von Aktivkohlefasermodulen an einem Aufnahmeboden in einem Adsorptionsapparat mit elektrischen Anschlüssen und Potentialausgleich gegen elektrostatische Aufladung einschließlich der Schaltung bei der Ad- und Desorption,
Fig. 10a bis 10c Varianten von Aktivkohlefasermodulen mit unterschiedlichen axialen Längen und
Fig. 11 eine schematische Ansicht eines Adsorptionsapparates mit Aktivkohlefasermodulen zur Ausführung des erfindungsgemäßen Verfahrens.

Das Beispiel 1 zeigt eine Lösung, die nicht zur Erfindung gehört.

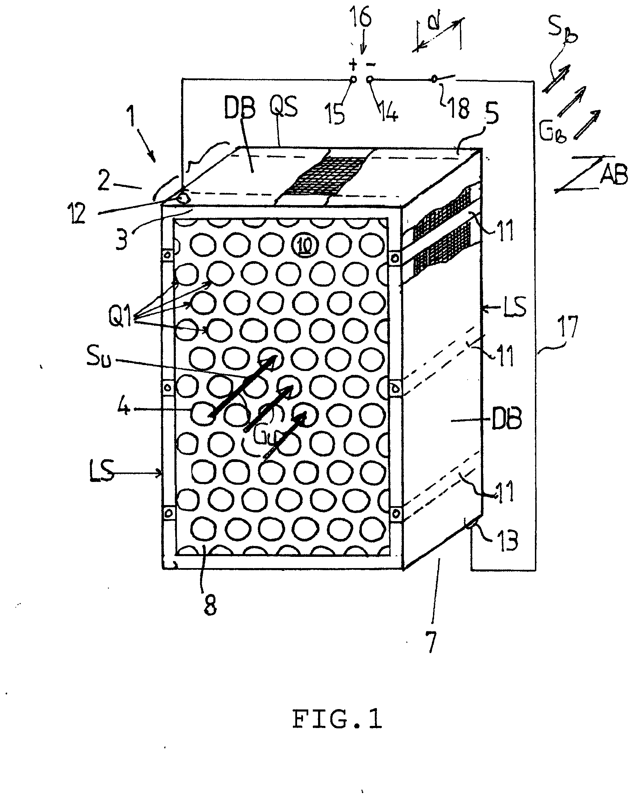

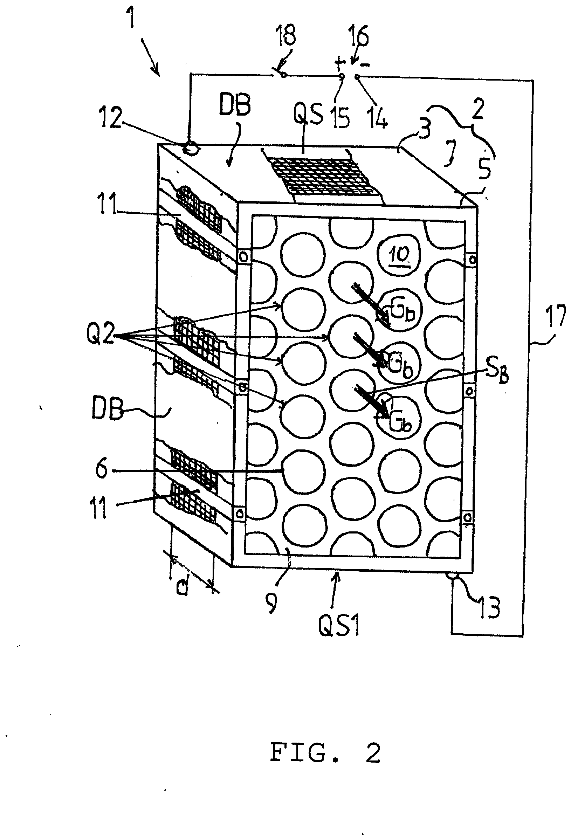

Die Fig. 1 und 2 zeigen in perspektivischer Ansicht ein Adsorptionsmodul 1 in Form einer Sandwichplatte 2. Die Sandwichplatte 2 setzt sich aus einer dünnen inneren Lage 3 aus einem elektrisch leitfähigem Material mit Gaseintrittsöffnungen 4, einer dünnen äußeren Lage 5 aus einem elektrisch leitfähigem Material mit Gasaustrittsöffnungen 6 (siehe Fig. 2) und einer Aktivkohlefasermatte 7 zusammen, die zwischen der inneren Lage 3 und der äußeren Lage 5 angeordnet ist und von diesen in einem komprimierten elektrisch leitfähigen Zustand gehalten ist. Die innere Lage 3 und die äußere Lage 5 bestehen aus jeweils einem Lochblech 8 und 9 (siehe Fig.2). Die Längs- und Stirnseiten der Sandwichplatte 2 sind durch Abdeckbleche DB gasdicht verschlossen. Das innere Lochblech 8 weist einen freien Durchströmungsquerschnitt Q1 für das unbehandelte Gas in die Aktivkohlefasermatte 7 auf, der sich aus der Summe aller im Lochblech 8 befindlichen Gaseintrittsöffnungen 4 ergibt. Ebenso besitzt das äußere Lochblech 9 einen freien Durchströmungsquerschnitt Q2, der sich aus der Summe aller im Lochblech 9 angeordneten Gasaustrittsöffnungen 6 ergibt. Der freie Durchströmungsquerschnitt Q1 und Q2 wird erreicht, indem in die Flächen der Lochbleche 8 und 9 Schlitze oder Löcher 10 eingebracht sind, wobei der freie Durchströmungsquerschnitt Q1 der inneren Fläche 5 bis 80% der Fläche des Lochblechs 8 und der freie Durchströmungsquerschnitt Q2 der äußeren Fläche des Lochblechs 9 bei 50 bis 95% liegt, d.h. der freie Durchströmungsquerschnitt nimmt von innen nach außen zu. Das innere und äußere Lochblech 8 bzw. 9 hat eine Materialdicke, die von der Belastung und der mechanischen Stabilität der Module abhängig ist und besteht aus einem elektrisch leitfähigen Material, vorzugsweise Kupfer. Es kann aber auch aus der Gruppe Aluminium, Magnesium oder deren Legierungen, Eisen, unlegierter Stahl, Edelstahl, Nickelbasislegierungen, Titan bzw. Titanlegierungen in Abhängigkeit der an den Aktivkohlefasern zu adsorbierenden Schadstoffe ausgewählt werden. Die Aktivkohlefasermatte 7 besteht aus mehreren, beispielsweise 3 bis 300, bevorzugt 150 Lagen eines aktivierten Carbonfasergewebes, -vlieses, -gestrickes oder -filzes, das beispielsweise in einer Dicke von 100 mm, einen Faserdurchmesser von 6 bis 50 µm, mit einer spezifischen Adsorptionsoberfläche von >600 bis >3000 m²/g und einer Konfektionsbreite KB von 20 bis 150 cm vorliegen kann.

Das innere und äußere Lochblech 8 bzw. 9, zwischen denen die Aktivkohlefasermatte 7 liegt, wird voneinander in einem Abstand AB durch elektrisch nichtleitende Abstandshalter 11 gehalten, die entlang der Längsseiten LS der Lochbleche 8 und 9 angeordnet und jeweils an den Lochblechen befestigt sind.

Der Abstand AB ist so bemessen, dass er etwa um das 0,01-bis 0,4-fache gegenüber der Dicke d der Aktivkohlefasermatte 7 geringer ist, so dass die Aktivkohlefaserlagen der Aktivkohlefasermatte 7 beim Konfektionieren (Zusammenbau) der Sandwichplatte 2 soweit, zusammengedrückt werden, dass sich die Aktivkohlefasern untereinander in Längs- und Querrichtung der Sandwichplatte 2 berühren und den elektrischen Strom auch in Querrichtung des Faserverlaufs leiten können.

Das innere Lochblech 8 besitzt an seiner oberen Querseite QS einen Anschluss 12 und das äußere Lochblech 9 an seiner der Querseite QS des inneren Lochbleches 8 gelegenen unteren Querseite QS1 einen Anschluss 13, wobei die Anschlüsse 12 und 13 bzw. die Anschlüsse 15 und 16 die Anschlüsse für die Stromquelle sind, so dass das innere Lochblech 8, die Aktivkohlefasermatte 7 und das äußere Lochblech 9 in Querrichtung einen Stromkreis 17 bilden, der durch einen Schalter 18 ein- oder ausgeschaltet werden kann.

Der Stromkreis 17 ist für Gleich- und Wechselspannungen bis zu 400 V ausgelegt.

Die Strömungsrichtung S_{U} des zu behandelnden Gases Gᵤ, die Strömungsrichtung S_{B} des Desorptionsgases G_{b} sind in den Fig. 1 und 2 mit Pfeilen markiert und stimmen in ihrer Richtung überein.

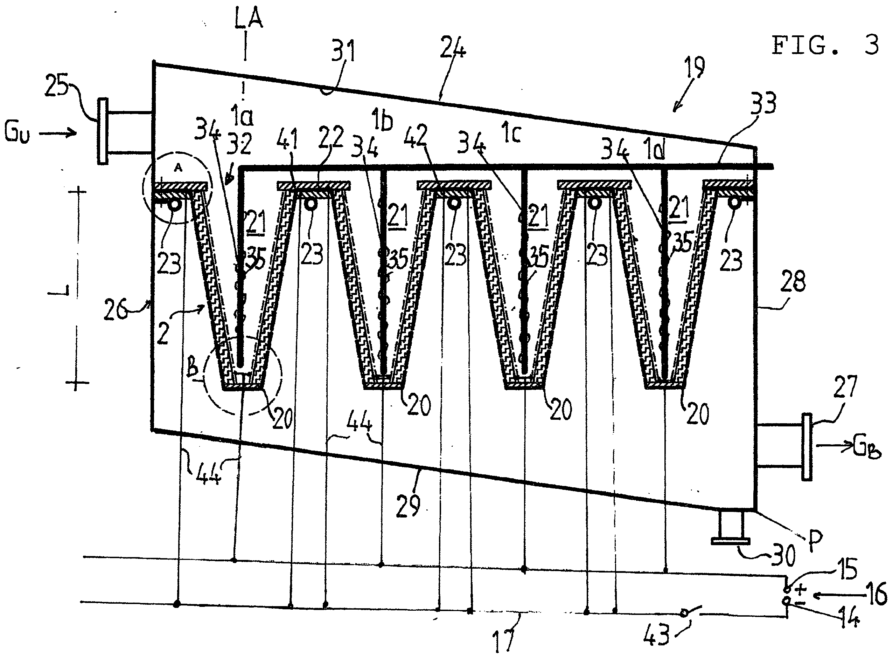

Es wird jetzt auf die Fig. 3 Bezug genommen, die mehrere Adsorptionsmodule 1_{(a...n)} zeigt, die in einem Adsorptionsapparat 19 horizontal in Reihe hintereinander angeordnet sind und vom Gasstrom parallel durchströmt werden. Die Adsorptionsmodule 1_{(a...n)} bestehen aus je zwei, gegenüber einem Boden 20 nach außen geneigten Sandwichplatten 2, die miteinander je einen trapezförmigen geschlossenen Behandlungsabschnitt 21 mit der axialen Länge L begrenzen. Die äußeren Lochbleche 9 der beiden Sandwichplatten 2 sind untereinander fußseitig durch den Boden 20 gasdicht verschlossen. Die äußeren Lochbleche 9 der in der Reihe aneinandergrenzenden Adsorptionsmodule, beispielsweise die Adsorptionsmodule 1a und 1b, sind kopfseitig durch ein Verbindungsblech 22 miteinander verbunden, das sich elektrisch isoliert auf eine im Adsorptionsapparat 19 befestigte Halterung 23 abstützt.

Der Boden 20 und das Verbindungsblech 22 bestehen aus dünnem Material, das dem Material des eingesetzten Lochbleches 9 entspricht.

Zweckmäßigerweise sind die beiden äußeren Lochbleche 9 eines jeden Adsorptionsmoduls 1_{(a...n)} bodenseitig mit dem Boden 20 und das kopfseitige Verbindungblech 22 mit den äußeren Lochblechen 9 zweier in der Reihe aneinandergrenzender Adsorptionsmodule, verschweißt. Natürlich ist auch möglich, ohne die Erfindung zu verlassen, dass die äußere Lage 5, also
das Lochblech 9, in Form eines Trapezprofiles bereitgestellt wird, dessen Seitenwände mit den Löchern 10 versehen sind. Der Adsorptionsapparat 19 ist als räumliches Parallelogramm 24 ausgebildet, bei dem der Gaseintrittsstutzen 25 für das mit Schadstoffen beladene Gas Gᵤ an einer Stirnseite 26 des Adsorptionsapparates 19 horizontal oberhalb der in Reihe angeordneten Adsorptionsmodule 1a bis 1d liegt. Der Gasaustrittsstutzen 27 befindet sich unterhalb der Adsorptionsmodule 1_{(a...n)} oberhalb des tiefsten Punktes P an der anderen Stirnseite 28 des Adsorptionsapparates 19.

Am tiefsten Punkt P ist am Behältermantel 29 des Adsorptionsapparates 19 ein Austrittsstutzen 30 für das anfallende flüssige oder gasförmige Desorbat angeordnet. Der in den Adsorptionsapparat 19 eintretende Gasstrom wird an der oberen inneren Behälterwand 31 des räumlichen Parallelogramms 24 so umgelenkt, dass das unbehandelte Gas Gᵤ in die Behandlungsabschnitte 21 durch die Eintrittsbereiche 32 der Adsorptionsmodule 1_{(a...n)} annähernd vertikal gelenkt wird. Das Gas Gᵤ gelangt dann über die Löcher 10 bzw. Schlitze des inneren Lochbleches 8 gleichmäßig verteilt in die Aktivkohlefasermatte 7 zur Adsorption der Schadstoffe, durchströmt die Aktivkohlefasermatte 7 quer von innen nach außen und verlässt die Adsorptionsmodule 1_{(a...n)} über die Löcher 10 im jeweils äußeren Lochblech 9 (siehe Fig. 1 und 2) .

In jeden Behandlungsabschnitt 21 der in Reihe liegenden Adsorptionsmodule 1_{(a...n)} ist ein an eine gemeinsame Zuführleitung 33 angeschlossenes Verteilrohr 34 für ein Spülgas, vorzugsweise Stickstoff, geführt, das entlang der Längsachse LA der Adsorptionsmodule 1_{(a...n)} bis nahe an den Boden 20 verläuft. Das Verteilrohr 34 ist an seinem Ende geschlossen und besitzt gleichmäßig über seine äußere Mantelfläche verteilte Austrittsöffnungen 35 für das Spülgas. Dies stellt sicher, dass das Spülgas gleichmäßig auf die Aktivkohlefasermatte 7 verteilt und das Ausspülen der desorbierten Schadstoffe über die Aktivkohlematte 7 vergleichmäßigt wird.

Der Stromanschluss entspricht demjenigen in Fig. 1 und 2 beschriebenen Anschluss.

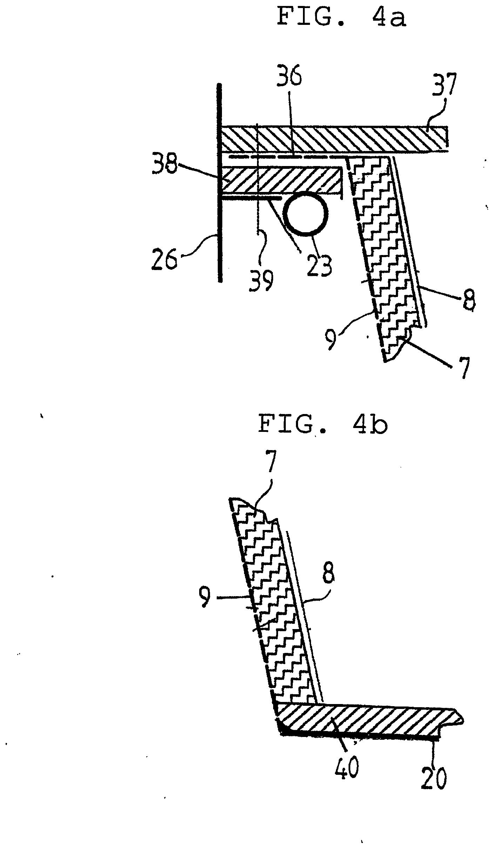

Die Fig. 4a und 4b zeigen Einzelheiten der elektrischen Isolation der inneren und äußeren Lochbleche 8 und 9 voneinander von Aktivkohlefasermodulen sowie deren Befestigung im Adsorptionsapparat 19.

Das der Stirnseite 26 des Adsorptionsapparates 19 zugewandte äußere Lochblech 9 hat kopfseitig einen nach außen gebogenen Schenkel 36, der zwischen einer oberen elektrisch nichtleitenden Verbindungsplatte 37 und einer unteren Isolationsplatte 38, beispielsweise Teflon- oder Polyethylen-Platte, durch eine Verschraubung 39 gehalten ist, wobei sich die untere Isolationslage 38 auf der im Adsorptionsapparat 19 befestigten Halterung 23 abstützt.

Auf dem Boden 20 eines jeden Adsorptionsmodules 1_{(a...n)} ist eine untere Isolationsplatte 40 angeordnet, auf der das innere Lochblech 8 mit der Aktivkohlefasermatte 7 stirnseitig aufliegt, so dass das innere Lochblech 8 und äußere Lochblech 9 voneinander elektrisch isoliert sind. Die Isolationsplatte 40 besteht vorzugsweise auf Teflon oder Polyethylen.

Das kopfseitige Verbindungsblech 22 der aneinandergrenzenden äußeren Lochbleche 9 ist gegenüber dem inneren Lochblech 8 durch eine obere Isolationsplatte 41 und gegenüber der Halterung 23 durch eine untere Isolationsplatte 42 elektrisch isoliert (siehe Fig. 3).

Ein an den Anschluss 12 des inneren Lochbleches 8 und an den Anschluss 13 der äußeren Lochbleches 9 angelegter elektrischer Strom des Stromkreises 17 der Spannungsquelle 16 kann somit die Aktivkohlefasermatte 7 nur in Querrichtung, d.h. von innen nach außen oder umgekehrt durchfließen. Die von der Spannungsquelle 16 gelieferte Potentialdifferenz zwischen den Polen 15 und 14 wird in Abhängigkeit der Dicke d der Aktivkohlefasermatte 7, der erforderlichen Desorptionstemperatur der Schadstoffe und der Konzentration der Schadstoffe im unbehandelten Gas gewählt. Sie kann zwischen 10 V und 400 V liegen.

Die Anschlüsse 12 und 13 sind mit der Spannungsquelle 16 über einen Schalter 43 durch elektrisch nicht isolierte Verbindungsleitungen 44 verbunden, die durch den Boden 20 des jeweiligen Adsorptionsmodules 1_{(a...n)} und dem Behältermantel 29 des Adsorptionsapparates 19 gasdicht geführt sind.

Im vorliegenden Beispiel läuft das Verfahren wie folgt ab. Das unbehandelte Gas Gᵤ, beispielweise Hexan enthaltene Abluft, wird dem Adsorptionsapparat 19 über den Gaseintrittsstutzen 25 in horizontaler Strömungsrichtung oberhalb der in Reihe angeordneten Adsorptionsmodule 1_{(a...n)} zugeführt und in die jeweiligen Behandlungsabschnitte 21 der Adsorptionsmodule 1_{(a...n)} gelenkt. Das unbehandelte Gas Gᵤ strömt durch die Löcher 10 des inneren Lochbleches 8 in die Schadstoffe adsorbierende Aktivkohlefasermatte 7 und verlässt diese durch die Löcher 10 des äußeren Lochbleches 9 als gereinigter Gasstrom G_{B}. Die Adsorption erfolgt im vorliegenden Beispiel somit von innen nach außen quer durch die Aktivkohlefasermatte 7.

Die Gesamtfläche der Aktivkohlefasermatte 7 wird in Abhängigkeit der Schadstoffkonzentration in der Abluft gewählt und beträgt beispielsweise bei einer Luftmenge von 1000 m³/h, einem Betriebsdruck von 35 mbar, einer Temperatur von +254 °C, einer Schadstoffkonzentration von 100 mg/m³ etwa 9m².

Nach Beladung der Aktivkohlefasermatte 7 wird die Zufuhr des unbehandelten Gases Gᵤ durch ein nicht weiter dargestelltes Ventil unterbrochen und von der Adsorption auf Regeneration umgeschaltet. Dazu wird mit Spülgas, im vorliegenden Beispiel Stickstoff mit einem maximalen Sauerstoffgehalt <5%, über das Verteilrohr 34 mittig in jeden Behandlungsabschnitt 21 geleitet und in die Aktivkohlefasermatte 7 gleichmäßig verteilt sowie der Adsorptionsapparat damit inertisiert. Anschließend wird die Aktivkohlefasermatte 7 auf die Desorptionstemperatur erwärmt. Die Erwärmung erfolgt elektrisch, d.h. der aus innerem Lochblech 8, Aktivkohlefasermatte 7 und äußerem Lochblech 9 bestehende Stromkreis 17 wird eingeschaltet, so dass der Strom vom inneren Lochblech 8 quer durch die Aktivkohlefasermatte 7 in das äußere Lochblech 9 fließt. Die Höhe der elektrischen Leistung wird in Abhängigkeit der erforderlichen Desorptionstemperatur der Schadstoffe und der Konzentration der Schadstoffe im Gas gewählt. Sie liegt bei den hier vorliegenden Bedingungen des Beispiels bei ca. 5kW.

Das Beispiel 2 verdeutlicht die Erfindung.

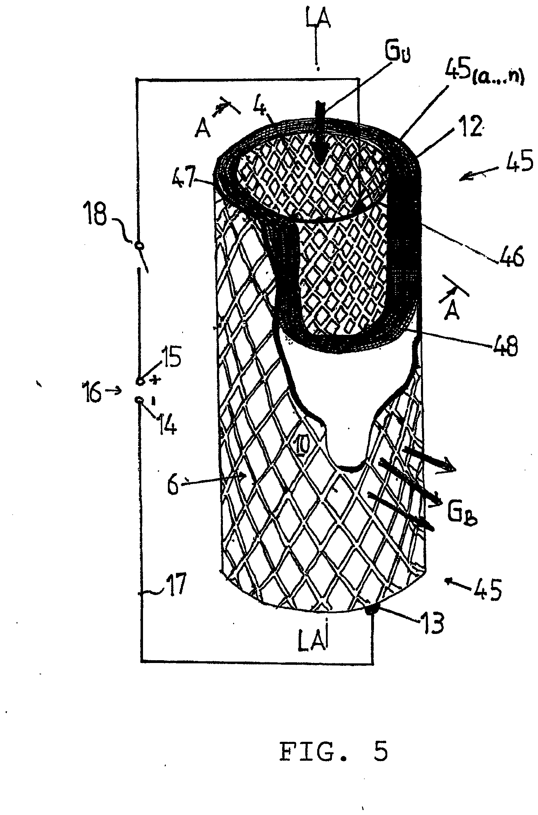

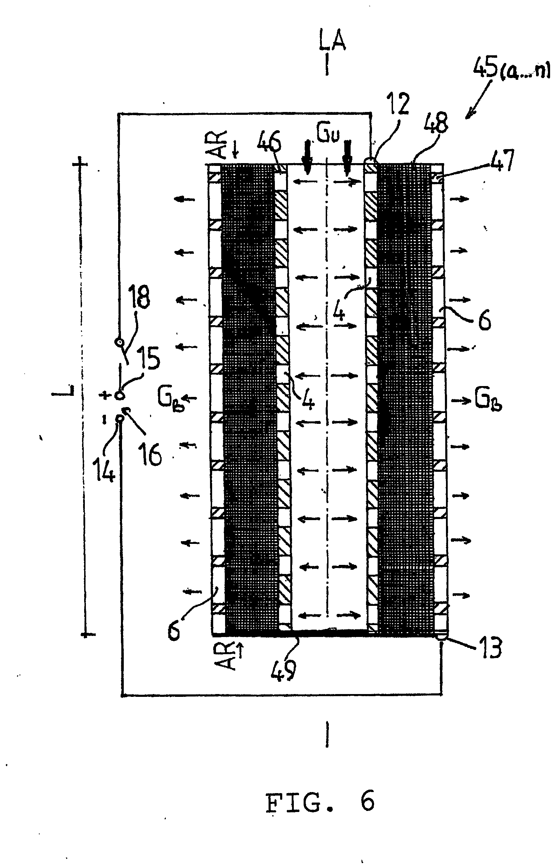

Die Fig. 5 bis 11 zeigen eine besonders bevorzugte Ausführung des Adsorptionsmoduls 45 in Form des erfindungsgemäßen Aktivkohlefasermoduls 45_{(a...n)} in perspektivischer und schematischer Ansicht. Das Aktivkohlefasermodul 45_{(a...n)} setzt sich aus einem inneren zylindrischen Hohlkörper 46, einem äußeren zylindrischen Hohlkörper 47 und einer zwischen dem inneren Hohlkörper 46 und äußeren Hohlkörper 47 angeordneten Aktivkohlefaserwicklung 48 zusammen. Die radiale Gasströmung durch die Aktivkohlefaserwicklung von innen nach außen ist in Fig. 6 dargestellt.

Der innere Hohlkörper 46 und der äußere Hohlkörper 47 bestehen aus elektrisch leitfähigem Material, vorzugsweise aus Kupfer. Je nach Art und Konzentration des Schadstoffes im unbehandelten Gas kann das elektrisch leitfähige Material für den Hohlkörper 47 auch aus der Gruppe Aluminium, Magnesium oder deren Legierungen, aus Eisen, unlegiertem Stahl, Edelstahl, Nickelbasislegierungen oder Titan bzw. Titanlegierungen ausgewählt werden.

Die Abmessungen des inneren Hohlkörpers 46 können beispielsweise bei einer Wanddicke zwischen 1 bis 2,5 mm, der Durchmesser bei 80 bis 600 mm und seine Länge bei 1400 bis 3000 mm liegen.

Fußseitig ist der innere Hohlkörper 46 druck- und gasdicht mit einen Bodenblech 49 verschlossen, das mit dem Mantel 50 des Hohlkörpers 46 an seiner bodenseitigen Stirnseite 51 verschweißt ist und somit einen Behandlungsabschnitt 52 im Hohlkörper 46 bildet. Das Bodenblech 49 besteht aus einem Material, das dem Material des inneren Hohlkörpers 46 entspricht.

Kopfseitig hat der äußere Hohlkörper 47 einen nach außen gerichteten Ringflansch 53, der mit dem Mantel 54 des äußeren Hohlkörpers 47 an seiner Stirnseite 55 durch eine Schweißverbindung befestigt ist. Der Ringflansch 53 besteht aus einem Material, das dem Material des äußeren Hohlkörpers 47 entspricht. Über den Ringflansch 53 erfolgt die Befestigung des Aktivkohlefasermodules 45_{(a...n)} an einem im Adsorptionsapparat 19 festgelegten Aufnahmeboden 56 durch eine elektrisch nichtleitende Verschraubung.

In den Mantel 50 des inneren Hohlkörpers 46 sind Gaseintrittsöffnungen 4 in Form von Löchern oder Schlitzen 10 eingebracht, die gleichmäßig über die Mantelfläche verteilt sind. Der freie Durchströmungsquerschnitt Q1 dieser Löcher 10 des inneren Hohlkörpers 46 quer zu seiner Längsachse LA liegt zwischen 5 und 80% der Mantelfläche.

Um den Mantel 50 des inneren Hohlkörpers 46 ist eine Aktivkohlefaserwicklung 48 angeordnet, die in Abhängigkeit der Art und Konzentration des Schadstoffes im Gas aus mehreren Wickellagen, beispielsweise 3 bis 300 Lagen, bevorzugt 150 Lagen, eines aktivierten Aktivkohlefasergewebes, -vlieses, -gestrickes oder -filzes mit einem Faserdurchmesser von etwa 6 bis 50 µm und einer Konfektionsbreite KB von 20 bis 150 cm bestehen kann.

Der äußere Hohlkörper 47 besteht ebenso wie der innere Hohlkörper 46 aus einem elektrisch leitenden Material, das dem des Hohlkörpers 47 entspricht.

In den Mantel 54 des äußeren Hohlkörpers 47 sind Gasaustrittsöffnungen 6 in Form von Löchern, Schlitzen oder Gittern 10 eingebracht, die über die Mantelfläche des äußeren Hohlkörpers 47 gleichmäßig verteilt sind. Der freie Durchströmungsquerschnitt Q2 dieser Löcher 10 des äußeren Hohlkörpers 47 quer zu seiner Längsachse LA beträgt zwischen 50 bis 95% der Mantelfläche 54 (siehe auch Fig. 1 und 2).

Das bedeutet, dass der freie Durchströmungsquerschnitt Q1 radial von innen nach außen auf den Durchströmungsquerschnitt Q2 zunimmt.

Das Aktivkohlefasermodul 45_{(a...n)} kann zweckmäßig in folgenden Arbeitsschritten hergestellt werden:
a) Rundbiegen und Fügen des dünnen metallischen schlitz-, sieb-, lochblech- oder gitterartigen Materials zu einem inneren und einem äußeren zylinderförmigen Hohlkörper 46 und 47 mit aufeinander abgestimmten unterschiedlichen Durchmessern des Aktivkohlefasermoduls,
b) Umwickeln des inneren Hohlkörpers 46 mit mindestens einer Wickellage 48 aus einer Aktivkohlefaser und deren Befestigung, wobei die Konfektionsbreite KB der Aktivkohlefasermatte die axiale Länge L des Aktivkohlefasermoduls bestimmt,
c) radiales Komprimieren der Aktivkohlefaserwicklung 48 durch ein axiales Aufschieben des äußeren Hohlkörpers 47 auf die Aktivkohlefaserwicklung 48, wobei der äußere Hohlkörper 47 einen Innendurchmesser ID aufweist, der gegenüber dem Außendurchmesser AD der Aktivkohlefaserwicklung 48 um etwa das 0,01- bis 0,4-fache geringer ist, so dass die Aktivkohlefaserwicklung 48 radial zusammengedrückt und in einem dichten elektrisch leitfähigen Zustand auch in Querrichtung der Fasern gehalten ist.

Der innere Hohlkörper 46 besitzt an seiner kopfseitigen Stirnseite 55 einen Anschluss 12 und der äußere Hohlkörper 47 an seiner bodenseitigen Stirnseite 51 einen Anschluss 13, wobei der Anschluss 12 mit dem Anschluss 15 und der Anschluss 13 mit dem Anschluss 14 sowie die Anschlüsse 14 und 15 mit der Spannungsquelle 16 verbunden sind, so dass der innere Hohlkörper 46, die Aktivkohlefaserwicklung 48 und der äußere Hohlkörper 47 einen Stromkreis 17 bilden, der durch einen Schalter 18 ein- oder ausgeschaltet werden kann. Der Stromkreis 17 ist für Gleichspannungen von 10 V bis 400 V ausgelegt. Es gehört aber auch zu der Erfindung, wenn anstelle eines Gleichstroms niederfrequenter Wechselstrom oder eine adäquate Stromkonfiguration verwendet wird. Außerdem kann der äußere Hohlkörper 47 des Aktivkohlefasermoduls 45_{(a...n)} von einem nicht weiter dargestellten an die Wechselstromquelle angeschlossenen Induktor umschlossen sein, der die Aktivkohlefaserwicklung 48 auf Desorptionstemperatur erwärmt.

In den Behandlungsabschnitt 52 eines jeden Aktivkohlefasermoduls taucht ein Verteilrohr 57 für ein inertes Spülgas, beispielsweise Stickstoff, ein, das entlang der Längsachse LA des Aktivkohlefasermoduls bis nahe dem Bodenblech 49 geführt ist. Das Verteilrohr 57 ist an seinem dem Bodenblech 49 zugewandten Ende geschlossen und hat über seine äußere Mantelfläche gleichmäßig verteilte Austrittsöffnungen 58 für das Spülgas. Dies stellt sicher, dass das Spülgas gleichmäßig über die Löcher/Schlitze 10 des inneren Hohlkörpers 46 in die Aktivkohlefaserwicklung 48 hinein verteilt wird und die desorbierten Schadstoffe bei der Regeneration aus der Aktivkohlefaserwicklung 48 ausgespült werden.

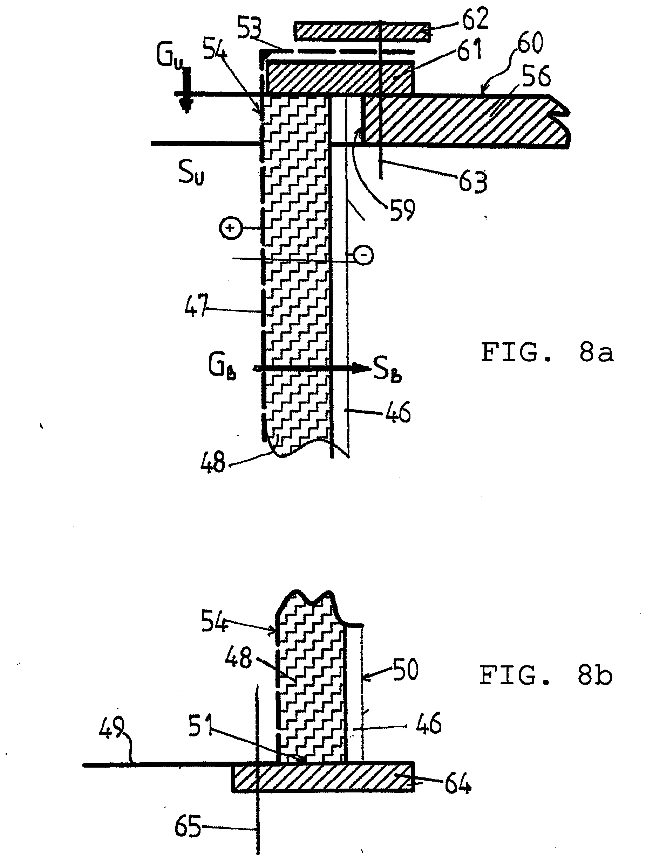

Die Fig. 8a und 8b stellen Einzelheiten der elektrischen Isolation des inneren und äußeren Hohlkörpers 46 und 47 voneinander, sowie ihre Befestigung am Aufnahmeboden 56 im Adsorptionsapparat 19 dar.

In der Fig. 8a ist die Befestigung des äußeren Hohlkörpers 47 am Aufnahmeboden 56 gezeigt, in dem mindestens eine Einbauöffnung 59 vorgesehen ist, in der das Aktivkohlefasermodul 45_{(a...n)} so festgelegt ist, dass die Längsachse LA des Aktivkohlefasermoduls 45_{(a...n)} rechtwinklig zur Strömungsrichtung Sᵤ des unbehandelten Gases Gᵤ verläuft und der Ringflansch 53 des äußeren Hohlkörpers 47 an der der Strömungsrichtung Sᵤ zugewandten Seite 60 des Aufnahmebodens 56 angeordnet ist. Der elektrisch leitende Ringflansch 53 liegt zwischen einer unteren elektrisch nichtleitenden Ringplatte 61 aus Telefon oder Polyethylen und einer oberen elektrisch nichtleitenden Ringplatte 62 aus Teflon oder Polyethylen. Die obere Ringplatte 62, der Ringflansch 53 und die untere Ringplatte 61 sind durch eine Verschraubung 63 nahe der Einbauöffnung 59 am Aufnahmeboden 56 befestigt. Die untere Ringplatte 61 ist so ausgebildet, dass sie den elektrisch leitenden Ringflansch 53 des inneren Hohlkörpers 46 vollständig unterfüttert, die Aktivkohlefaserwicklung 48 und die obere Stirnseite 55 des elektrisch leitenden Mantels 54 des äußeren Hohlkörpers 47 überdeckt und somit voneinander elektrisch isoliert.

Die Fig. 8b zeigt die elektrische Isolierung des elektrisch leitenden Mantels 50 des inneren Hohlkörpers 46 und des elektrisch leitenden Mantels 54 des äußeren Hohlkörpers 47. Die elektrische Isolierung besteht aus einer Bodenringplatte 64 aus Teflon oder Polyethylen, deren Ringfläche die bodenseitige Stirnseite 51 des inneren Mantels 50, des äußeren Mantels 54 sowie die Aktivkohlefaserwicklung 48 überdeckt und durch eine Verschraubung 65 am Bodenblech 49 befestigt ist.

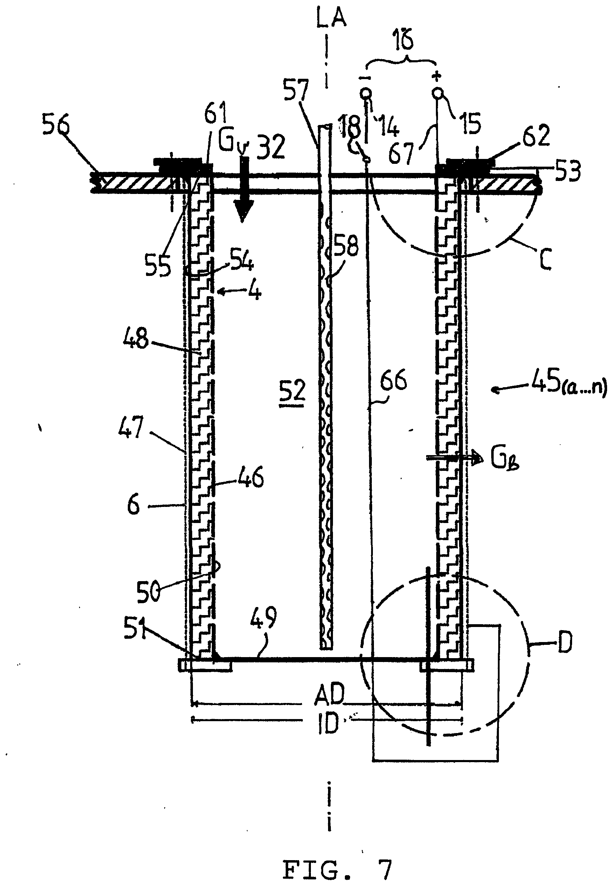

Es wird nochmals auf die Fig. 6 und 7 Bezug genommen. Der Anschluss 12 des inneren Hohlkörpers 46 und der Anschluss 13 des äußeren Hohlkörpers 47 sind mit der Spannungsquelle 16 durch Verbindungsleitungen 66 und 67 verbunden, von denen die Verbindungsleitung 66 an den Pol 14 und die Verbindungsleitung 67 an den Pol 15 der Spannungsquelle 16 angeschlossen ist.

Die Verbindungsleitung 66 ist durch das Bodenblech 49 gasdicht und elektrisch nichtleitend geführt und im Behandlungsabschnitt 52 des inneren Hohlkörpers 46 freitragend angeordnet.

Mit dem Schalter 68 kann die Spannungsquelle 16 ein- oder ausgeschaltet werden.

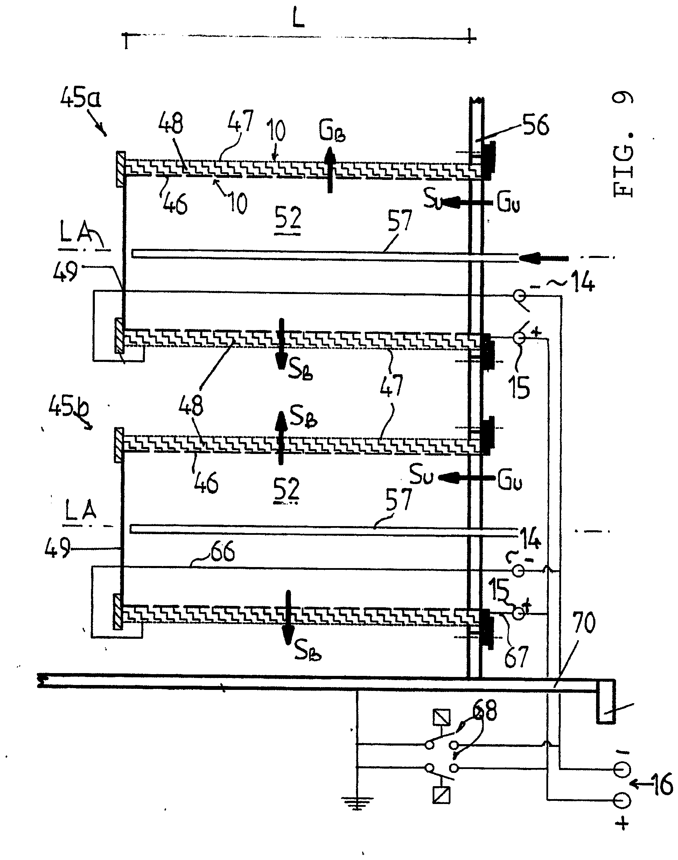

Die Fig. 9 zeigt beispielsweise zwei im Aufnahmeboden 56 in Dreieck- oder Viereckteilung angeordnete Aktivkohlefasermodule 45ₐ und 45_{b}, die stellvertretend auch für eine größere Anzahl von in einem im Aufnahmeboden 56 angeordneten Aktivkohlefasermodule stehen. Die Aktivkohlefasermodule 45ₐ und 45_{b} sind rechtwinklig zur Strömungsrichtung Sᵤ des eintretenden unbehandelten Gases Gᵤ ausgerichtet. Das Gas gelangt in Strömungsrichtung in die von den inneren Hohlkörpern 46 definierten Behandlungsabschnitte 52 und wird durch die Löcher/Schlitze 10 des inneren Hohlkörpers 46 gleichmäßig über die axiale Länge L des jeweiligen Aktivkohlefasermoduls in die Aktivkohlefaser-wicklung 48 geleitet. Die Schadstoffe des Gases werden beim Durchströmen der Aktivkohlefaserwicklung 48 radial an den Aktivkohlefasern adsorbiert. Das behandelte Gas verlässt die Aktivkohlefaserwicklung 48 durch die Löcher/Schlitz 10 des äußeren Hohlkörpers 47.

Die Strömungsrichtung S_{U} des unbehandelten Gases Gᵤ und die die Strömungsrichtung S_{B} des Desorptionsgases G_{b} sind in der Fig. 9 mit Pfeilen markiert.

Beim Durchströmen des schadstoffbeladenen Gases durch den Behandlungsabschnitt 52 können elektrostatische Aufladungen entstehen, die einen Potentialausgleich erforderlich machen. Der Potentialausgleich wird erreicht, in dem die Verbindungsleitungen 66 und 67 über den Schalter 68 mit der Erdung des Adsorptionsapparat 70 verbunden sind, wobei die Aktivkohlefasermodule 45ₐ und 45_{b} während der Desorption von der Erdung getrennt sind, da sie nur von inertem Spülgas, beispielsweise Stickstoff, durchströmt werden. Nach Beendigung der Desorption und dem Ausspülen der Schadstoffe wird noch unter Spülgasatmosphäre, also noch vor Beginn der Adsorption die Erdung zum Ableiten einer elektrostatischen Aufladung zugeschaltet.

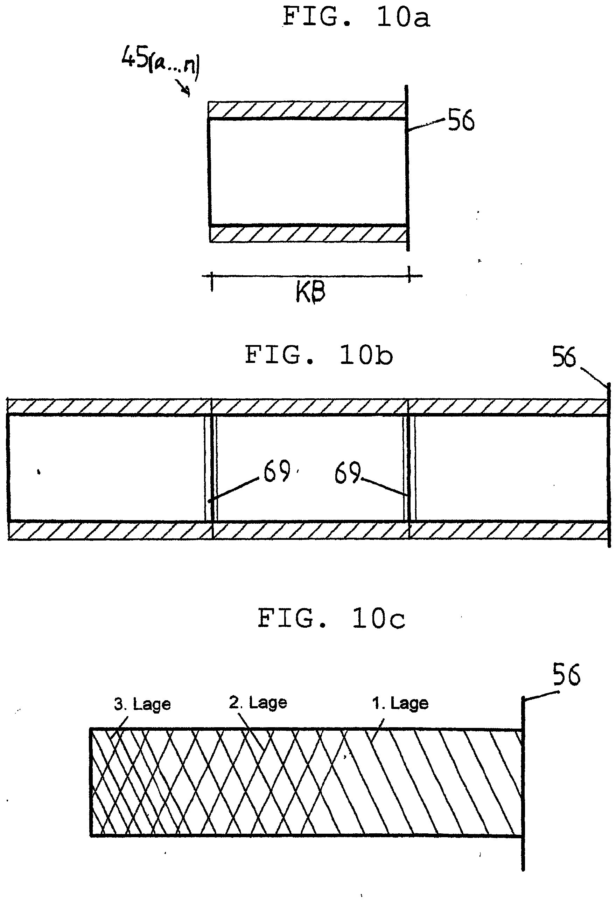

Die Fig. 10a bis 10c zeigen Varianten der Anordnung der Aktivkohlefaserwicklung 48 bei Aktivkohlefasermodulen 45_{(a...n)} mit unterschiedlichen axialen Längen L. Die axiale Länge L des Aktivkohlefasermoduls 45ₐ ist zweckmäßig auf die Konfektionsbreite KB der verfügbaren Aktivkohlefasergewebe, -vliese, -gestricke oder -filze abgestimmt (siehe Fig. 10a). Sind beispielsweise axiale Längen L der Aktivkohlefasermodule 45_{(a...n)} erforderlich, die deutlich über der Konfektionsbreite KB liegen, können mehrere gewickelte, aneinander geschobene Konfektionsbreiten als eine Gesamtwicklung aneinandergefügt werden, welche zusammen eine axiale Länge L aufweisen, die dem Produkt aus Konfektionsbreite KB und der Anzahl der aneinandergefügten Wicklungen entspricht.

Durch ein an den Stoßkanten angeordnetes Streifenband 69 wird ein unkontrollierter und ungleichmäßiger Gasdurchsatz verhindert.

Sofern die axiale Länge des Aktivkohlefasermoduls kleiner oder größer ist als die Konfektionsbreite KB werden, wie bei Filterkerzen, mindestens zwei, vorzugsweise mehr als drei über Kreuz gelegte Lagen aus Aktivkohlefasern um den inneren Hohlkörper 46 gewickelt (siehe Fig. 10c).

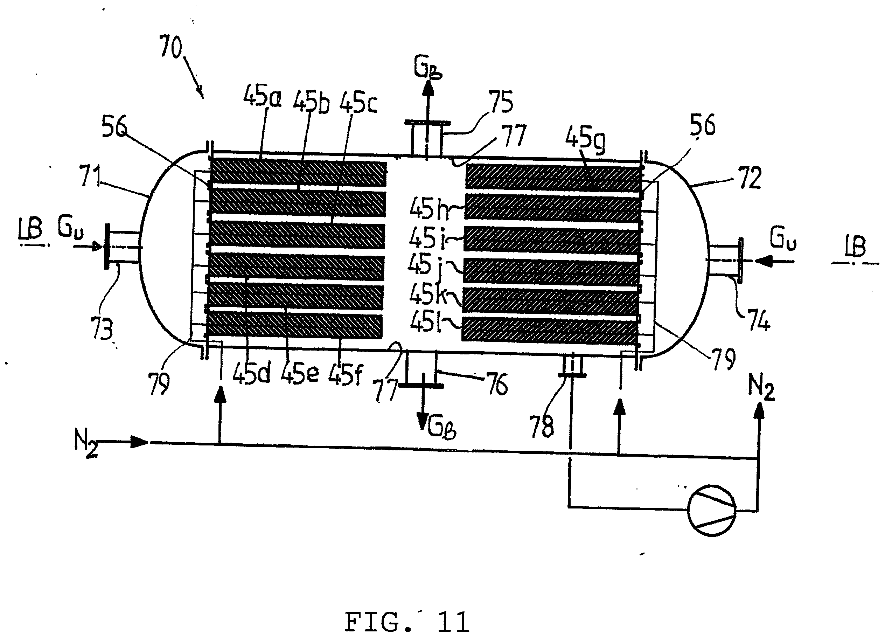

Die Fig. 11 zeigt einen Adsorptionsapparat 70 für große Gasdurchsätze mit relativ kurzen Aktivkohlefasermodulen 45_{(a...n)}, in dem beispielsweise zwei Aufnahmeböden 56 befestigt sind. Jeder Aufnahmeboden 56 trägt zehn in Dreieck- oder Viereckverteilung angeordnete Aktivkohlefasermodule, von denen beispielsweise die Module 45_{(a...j)} gezeigt sind, deren Aktivkohlefaserwicklung 48 rechtwinklig zur Strömungsrichtung des unbehandelten Gases liegen, das durch je einen zentrisch im Behälterboden 71 und 72 auf der Längsachse LB des Adsorptionsapparates 70 angeordneten Gaseintrittsstutzen 73 bzw. 74 in Richtung der Aktivkohlefasermodule 45_{(a...j)} strömt.

Die Gasaustrittsstutzen 75/76 sind in der Mitte des Mantels 77 des Adsorptionsapparates 70 gegenüber angeordnet. Bei dieser Anordnung kann es von Vorteil sein, das Spülgas, hier Stickstoff, in einer größeren Menge im Kreislauf zu fahren und nur geringe Mengen an frischem Spülgas zu- bzw. abzuführen (Fig. 11). Der Austrittsstutzen 78 für das gasförmige oder flüssige Desorbat befindet sich unterhalb der Aktivkohlefasermodule 45_{(a...j)}.

Das Spülgas, vorzugsweise Stickstoff, wird jedem in den Behandlungsabschnitt 52 eintauchenden Verteilrohr 57 über eine gemeinsame, den Mantel 77 des Adsorptionsapparates 70 druck- und gasdicht durchdringende Zuführleitung 79 zugeführt. Der elektrische Stromkreis 17 zwischen dem inneren Hohlkörper 46, der Aktivkohlefaserwicklung 48 und dem äußeren Hohlkörper 47 entspricht der Beschreibung gemäß Fig. 5.

Das im Adsorptionsapparat 70 ausgeführte erfindungsgemäße Verfahren soll nachfolgend an zwei weiteren Beispielen näher erläutert werden.

### Beispiel A

Ein Lösemittel verarbeitender Betrieb hat eine Abluftreinigungsanlage, um Lösungsmittel, die beispielsweise bei der Beschichtung von Folien verwendet werden, zu entfernen und die Abluft entsprechend zu reinigen. Außerdem können freie Emissionen in der Produktionshalle auftreten, die mit Absaugeinrichtungen über Dach die Einhaltung der maximalen Arbeitsplatzkonzentration in der Halle garantieren.

Diese aus der Halle und der Abluftreinigungsanlage anfallende
Abluft soll mit dem erfindungsgemäßen Verfahren gereinigt bzw. behandelt werden.

Folgende Betriebsdaten liegen zugrunde:

| | |
|---|---|
| Luftmenge: | 20.000m³/Stunde |
| Betriebsdruck: | 30 mbar |
| Temperatur: | +25 °C |
| Schadstoff in der Luft: | Hexan |
| Schadstoffkonzentration: | 140 mg/m³ . |

Es soll eine Schadstoffkonzentration von <50 mg/m³ in der gereinigten Abluft erreicht werden.

Im vorliegenden Beispiel läuft das erfindungsgemäße Verfahren wie folgt ab.

Die unbehandelte Abluft wird dem Adsorptionsapparat 70 über den Gaseintrittsstutzen 73 in horizontaler Strömungsrichtung zugeführt.

Der Adsorptionsapparat 70 hat einen Durchmesser von 2,4 m und eine Länge von 3 m. Im Adsorptionsapparat 70 sind 10 Aktivkohlefasermodule 45_{(a...j)} mit einem Durchmesser des inneren Hohlkörpers von 400 mm und einer axialen Länge von L von 1600 mm angeordnet. Die Dicke d der Aktivkohlefaserwicklung 48 beträgt 100 mm. Zur Adsorption werden die Aktivkohlefasermodule 45_{(a...j)} insgesamt 6 Stunden beladen und 4 Stunden regeneriert. Die Regeneration wird elektrisch durchgeführt, in dem die Aktivkohlefaserwicklung 48 erwärmt wird. Der elektrische Energieaufwand beträgt 4,0 kW pro Modul und Stunde.

Das anfallende Desorptionsgas enthält ca. 20 g/m³ Hexan, das in die vorhandene, für die Folienherstellung benötigte Abluftreinigungsanlage eingespeist werden kann.

### Beispiel B

Ähnlich wie im Beispiel A beschrieben, kann auch konzentrierte Abluft mit anderen Lösemitteln, beispielsweise Benzin, Toluol, Dichlormethan, Ethanol um nur einige gängige Schadstoffe zu nennen, in ähnlicher Form aufbereitet werden. Die mit dem erfindungsgemäßen Verfahren erreichten Restkonzentrationen entsprechen den derzeitigen gesetzlichen Forderungen, z.B. bei 20 mg/m³ oder 50 mg/m³.

Durch die elektrische Regeneration der Aktivkohlefaserwicklungen 48 von innen nach außen und der damit verbundenen Aufkonzentrierung des Schadstoffes im Desorptionsgas von bis ca. 1:1000 ist es möglich, das Desorptionsgas direkt einem Kondensator zuzuführen und die enthaltenen Lösemittel wasserfrei zu gewinnen. Nicht kondensierbare Bestandteile werden nach dem Kondensator dem Abluftstrom wieder zugeführt.

**Bezugszeichenliste**

| | |
|---|---|
| Adsorptionsmodul | 1_{(a...n)} |
| Sandwichplatte | 2 |
| gaseintrittseitige (innere) Lage von 2 | 3 |
| Gaseintrittsöffnung in 3 | 4, 46 |
| gasaustrittsseitige (äußere) Lage von 2 | 5 |
| Gasaustrittsöffnungen in 5 | 6, 47 |
| Aktivkohlefasermatte | 7 |
| Inneres Lochblech | 8 |
| Äußeres Lochblech | 9 |
| Löcher/Schlitze in 8, 9 | 10 |
| Abstandshalter | 11 |
| Anschluss von 8 bzw. 46 | 12 |
| Anschluss von 9 bzw. 47 | 13 |
| Anschluss, Pol | 14 |
| Anschluss, Pol | 15 |
| Spannungsquelle | 16 |
| Stromkreis | 17 |
| Schalter | 18 |
| Adsorptionsapparat | 19 |
| Boden | 20 |
| Trapezförmiger Behandlungsabschnitt | 21 |
| Verbindungsblech | 22 |
| Halterung | 23 |
| Räumliches Parallelogramm | 24 |
| Gaseintrittsstutzen von 24 | 25 |
| Stirnseite von 19/24 | 26, 28 |
| Gasaustrittsstutzen von 24 | 27 |
| Behältermantel von 19 | 29 |
| Austrittsstutzen für Desorbat | 30 |
| Innere obere Behälterwand | 31 |
| Eintrittsbereich für unbehandeltes Gas | 32 |
| Zuführleitung für Spülgas | 33 |
| Verteilrohr für Spülgas | 34 |
| Austrittsöffnungen an 34 | 35 |
| Nach außen gebogener Schenkel von 9 | 36 |
| Obere Verbindungsplatte | 37 |
| Untere Isolationsplatte | 38 |
| Verschraubung | 39 |
| Untere Isolationsplatte | 40, 42 |
| Obere Isolationsplatte | 41 |
| Schalter | 43 |
| Verbindungsleitungen | 44 |
| Adsorptionsmodul | 45 |
| Aktivkohlefasermodul | 45_{(a...n)} |
| Innerer Hohlkörper | 46 |
| Äußerer Hohlkörper | 47 |
| Aktivkohlefaserwicklung, Wickellage | 48 |
| Bodenblech | 49 |
| Mantel von 46 | 50 |
| Bodenseitige Stirnseite von 46 | 51 |
| Behandlungsabschnitt in 46 | 52 |
| Ringflansch | 53 |
| Mantel von 47 | 54 |
| Obere Stirnseite von 47 | 55 |
| Aufnahmeboden in 70 | 56 |
| Verteilrohr in 45, 45a, 45b | 57 |
| Austrittsöffnung in 57 | 58 |
| Einbauöffnung in 56 | 59 |
| Strömungszugewandte Seite von 56 | 60 |
| Untere Ringplatte | 61 |
| Obere Ringplatte | 62 |
| Verschraubung | 63 |
| Bodenringplatte | 64 |
| Verschraubung | 65 |
| Verbindungsleitungen | 66, 67 |
| Schalter | 68 |
| Streifenband | 69 |
| Adsorptionsapparat | 70 |
| Behälterboden von 70 | 71, 72 |
| Gaseintrittsstutzen an 70 | 73, 74 |
| Gasaustrittsstutzen an 70 | 75, 76 |
| Behältermantel von 70 | 77 |
| Austrittsstutzen für Desorbat | 78 |
| Zuführleitung für Spülgas | 79 |
| Abstand von 8 und 9 | AB |
| Außendurchmesser der Aktivkohlefaserwicklung 48 | AD |
| Aktivkohlefaserrichtung | AR |
| Dicke der Aktivkohlefasermatte 7 bzw. -wicklung | d |
| Deckblech | DB |
| Behandeltes Gas, Desorptionsgas | G_{b} |
| Unbehandeltes Gas | Gᵤ |
| Innendurchmesser von 47 | ID |
| Konfektionsbreite | KB |
| Axiale Länge von 1_{(a...n)} | L |
| Längsachse von 1_{(a...n)}, 46 | LA |
| Längsachse von 70 | LB |
| Längsseite von 8, 9 | LS |
| Tiefster Punkt von 24 | P |
| Freier Durchströmungsquerschnitt an 8, 46 | Q1 |
| Freier Durchströmungsquerschnitt an 9, 47 | Q2 |
| Obere Querseite von 8 | QS |
| Untere Querseite von 9 | QS1 |
| Strömungsrichtung des behandelten Gases | S_{b} |
| Strömungsrichtung des unbehandelten Gases | Sᵤ |

## Patentansprüche

1. Vorrichtung zum Behandeln eines mit Schadstoffen belasteten Gases mit mindestens einem in einem Adsorptionsapparat (70) eingesetzten, Adsorptionsmodul (45) zum Adsorbieren der Schadstoffe, wobei das Adsorptionsmodul (45) einen mit Gaseintrittsöffnungen (4) versehenen inneren zylindrischen Hohlkörper (46) aus einem elektrisch leitfähigen Material, einen mit Gasaustrittsöffnungen (6) versehenen äußeren zylindrischen Hohlkörper (47) aus einem elektrisch leitfähigen Material und eine elektrisch leitfähige Aktivkohlefaserwicklung (48) umfasst, die um den inneren Hohlköroper (46) angeordnet und vom äußeren Hohlkörper (47) umschlossen ist, wobei der innere Hohlkörper (46)fußseitig druck- und gasdicht mit einen Bodenblech (49) verschlossen ist, das mit einem Mantel (50) des Hohlkörpers (46) an seiner bodenseitigen Stirnseite (51) verschweißt ist und somit einen Behandlungsabschnitt (52) im Hohlkörper (46) bildet, mit einem elektrischen Stromkreis (17) zum Aufheizen der Aktivkohlefaserwicklung (48) für das Desorbieren der adsorbierten Schadstoffe, der zwischen innerem und äußerem Hohlkörper (46,47) gebildet ist, wobei der innere und äußere Hohlkörper (46,47) voneinander elektrisch isoliert und an eine Spannungsquelle (16) angeschlossen sind und das unbehandelte Gas aus dem vom inneren Hohlkörper (46) definierten Behandlungsabschnitt (52) von innen nach außen durch die Aktivkohlefaserwicklung (48) strömt, und mit einem Austrittsöffnungen (58)aufweisenden Verteilrohr (57) für ein Spülgas zum Inertisieren und Spülen der Aktivkohlefaserwicklung (48), wobei das Verteilrohr (57) entlang der Längsachse (LA) des Aktivkohlefasermoduls (45) in den Behandlungsabschnitt (52) bis nahe dem Bodenblech (49) des Aktivkohlefasermoduls (45) geführt und an seinem dem Bodenblech (49) zugewandten Ende verschlossen ist, **dadurch gekennzeichnet, dass** die Aktivkohlefaserwicklung (48) in einem radial zusammengedrückten dichten elektrisch leitfähigen Zustand⁵⁾ durch radiale Kompression gehalten ist, in dem die komprimierte Aktivkohlefaserwicklung (48) quer zu ihrer Längserstreckung vom Strom durchflossen und als Widerstand geschaltet ist, wobei zur radialen Kompression der Aktivkohlefaserwicklung (48) der äußere Hohlkörper (46) einen Innendurchmesser (ID) aufweist, der gegenüber dem Außendurchmesser (AD) der Aktivkohlefaserwicklung (48) um das 0,01 bis 0,4-fache geringer ist, und dass für den freien Gasdurchtritt quer zur Längsachse (LA) des inneren Hohlkörpers (46) die Gaseintrittsöffnungen (4) gleichmäßig über den Mantel (50) des inneren zylindrischen Hohlkörpers (46) verteilt sind, wobei die Gaseintrittsöffnungen (4) einem Durchströmungsquerschnitt (Q1) von 5 bis 80% der Fläche des Mantels (50) des inneren Hohlkörpers (46) entsprechen, und dass für den freien Gasaustritt quer zur Längsachse (LA) des äußeren zylindrischen Hohlkörpers (47) die Gasaustrittsöffnungen (6) gleichmäßig über den Mantel (54) des äußeren zylindrischen Hohlkörpers (47) verteilt sind, wobei die Gasaustrittsöffnungen (6) einem Durchströmungsquerschnitt (Q2) von 50 bis 95% der Fläche des Mantels (54) des äußeren Hohlkörpers (47) entsprechen.

2. Vorrichtung nach Anspruch 1, **dadurch gekennzeichnet, dass** der innere und äußere Hohlkörper (46,47) aus einem metallischen schlitz-, sieb-, lochblech- oder gitterartigen Material besteht, das in Abhängigkeit der an den Aktivkohlefasern adsorbierten Schadstoffe aus der Gruppe Kupfer, Aluminium, Magnesium und deren Legierungen, Eisen oder unlegierte Stähle, Edelstähle, Nickelbasislegierungen, Titan bzw. Titanlegierungen ausgewählt ist.

3. Vorrichtung nach Anspruch 1, **dadurch gekennzeichnet, dass** der innere und äußere Hohlkörper (46,47) elektrisch nichtleitend an einem Halter (23) oder Aufnahmeboden (56) im Adsorptionsapparat (70) befestigt sind.

4. Vorrichtung nach Anspruch 1, **dadurch gekennzeichnet, dass** der innere Hohlkörper (46) einen Anschluss (12) für einen Pol (15) und der äußere Hohlkörper (47) einen Anschluss (13) für den anderen Pol (14) der Spannungsquelle (16) aufweist, wobei die Spannungsquelle (16) eine Gleichspannungsquelle ist, deren Potentialdifferenz zwischen den Polen (14,15) in Abhängigkeit der Dicke (d) der Aktivkohlefaserwicklung (48) und der Desorptionstemperatur der adsorbierten Schadstoffe an den Aktivkohlefasern zwischen 10 V und 400 V gewählt ist.

5. Vorrichtung nach Anspruch 1, **dadurch gekennzeichnet, dass** der innere und äußere Hohlkörper (46,47) an die Wechselstromquelle (16) angeschlossen ist, deren Spannung und Frequenz in Abhängigkeit der Dicke (d) der Aktivkohlefaserwicklung (48) an die Desorptionstemperatur der adsorbierten Schadstoffe an den Aktivkohlefasern angepasst ist.

6. Vorrichtung nach Anspruch 3 oder 4, **dadurch gekennzeichnet, dass** die Anschlüsse (12,13) mit der Gleich- oder Wechselstromquelle (16) über freitragende, durch das Bodenblech (49) des inneren Hohlkörpers (46) des Aktivkohlefasermoduls (45_{(a...n)}) sowie den Behältermantel (77) des Adsorptionsapparates (70) gas- und druckdicht und elektrisch isoliert geführte Verbindungsleitungen (44,66,67) verbunden sind, die beim Durchströmen des schadstoffbeladenen Gases während der Adsorption der Schadstoffe an den Aktivkohlefasern mit der Erdung des Adsorptionsapparates (70) zum Ableiten einer elektrostatischen Aufladung über Schalter (68) zugeschaltet und die bei der Desorption der adsorbierten Schadstoffe durch die Schalter (68) von der Erdung elektrisch getrennt sind.

7. Vorrichtung nach Anspruch 5, **dadurch gekennzeichnet, dass** der äußere Hohlkörper (47) des Aktivkohlefasermoduls (45_{(a...n)}) von einem Induktor zum Erzeugen eines hochfrequenten Magnetfeldes zum Erwärmen der Aktivkohlefaserwicklung (48) umschlossen ist, der an die Wechselspannungsquelle (16) angeschlossen ist.

8. Vorrichtung nach Anspruch 1, **dadurch gekennzeichnet, dass** die Aktivkohlefaserwicklung (48) aus einem AktivkohlefaserGewebe mit einem Faserdurchmesser von 6 bis 50 µm, einer Faserlänge von 3 bis 200 mm aus 3 bis 300 Lagen gebildet ist.

9. Vorrichtung nach Anspruch 8, **dadurch gekennzeichnet, dass** das Aktivkohlefaser-Gewebe eine Konfektionsbreite (KB) hat, die der axialen Länge (L) des inneren bzw. äußeren Hohlkörpers (46,47) entspricht.

10. Vorrichtung nach Anspruch 9, **dadurch gekennzeichnet, dass** mehrere gewickelte, aneinandergeschobene Konfektionsbreiten (KB) als eine Gesamtwicklung aneinandergefügt sind, welche zusammen eine axiale Länge aufweisen, die dem Produkt aus Konfektionsbreite (KB) und der Anzahl der aneinandergefügten Wicklungen entspricht, und dass mit einem Streifenband (69) an deren Stoßkanten ein unkontrollierbarer und ungleichmäßiger Gasdurchsatz verhindert wird.

11. Vorrichtung nach Anspruch 9, **dadurch gekennzeichnet, dass** bei Hohlkörpern (46,47) mit einer gegenüber der Konfektionsbreite (KB) kleineren axialen Länge (L), die Aktivkohlefaserwicklung (48) aus mindestens zwei, vorzugsweise drei über Kreuz um den inneren Hohlkörper (46) gewickelten Lagen besteht.

12. Vorrichtung nach Anspruch 1, **dadurch gekennzeichnet, dass** die zwischen den Hohlkörpern (46,47) gehaltene Aktivkohlefaserwicklung (48) austauschbar ist.

13. Vorrichtung nach Anspruch 1, **dadurch gekennzeichnet, dass** mehrere Aktivkohlefasermodule (45_{(a...n)}) in Dreieck- oder Viereckteilung an einem senkrecht zur Längsachse (LB) des Adsorptionsapparates (70) ausgerichteten, in letzteren befestigten Aufnahmeboden (56) gas- und druckdicht sowie elektrisch nicht leitend gehalten sind, wobei die inneren und äußeren Hohlkörper (46,47) der Aktivkohlefasermodule (45_{(a...n)}) voneinander elektrisch isoliert sind und jeweils einen Behandlungsabschnitt (52) einschließen, in welchem jeweils das Verteilrohr (57) entlang der Längsachse (LA) des Aktivkohlefasermoduls (45_{(a...n)}) bis nahe an das Bodenblech (49) des inneren Hohlkörpers (46) des Aktivkohlefasermoduls (45_{(a...n)}) geführt ist.

14. Vorrichtung nach Anspruch 13, **dadurch gekennzeichnet, dass** der Gaseintrittsstutzen (73,74) in den Adsorptionsapparat (70) horizontal in Richtung des Eintrittsbereichs (32) der Aktivkohlefasermodule (45_{(a...n)}) und der Gasaustrittsstutzen (75,76) aus dem Adsorptionsapparat (70) gegenüber zum Gaseintrittsstutzen (73,74) ausgerichtet sind, wobei der Austrittstutzen (78) für das Desorbat am unteren Behältermantel des Adsorptionsapparates (70) angeordnet ist.

15. Verfahren zum Behandeln eines mit Schadstoffen belasteten Gases in einer Vorrichtung nach Anspruch 1, bei dem mindestens ein innerhalb eines Adsorptionsapparates (70) angeordnetes Adsorptionsmodul (45), das einen mit Gaseintrittsöffnungen (3) versehenen inneren zylindrischen Hohlkörper (46) aus elektrisch leitfähigem Material, einen mit Gasaustrittsöffnungen (6) versehenen äußeren zylindrischen Hohlkörper (47) aus elektrisch leitfähigem Material und eine elektrisch leitfähige Aktivkohlefaserwicklung (48) umfasst, mit dem Gas beaufschlagt und das Gas aus dem vom inneren Hohlkörper (46) definierten Behandlungsabschnitt (52) über die axiale Länge des Moduls verteilt und von innen nach außen durch die Aktivkohlefaserwicklung (48) geleitet wird, wobei die Adsorption der Schadstoffe an den Aktivkohlefasern der Aktivkohlefaserwicklung (48) erfolgt, anschließend die Regeneration der Aktivkohlefasern nach ihrer Beladung mit Schadstoffen mittels Aufheizen der Aktivkohlefasern durch Hindurchleiten eines elektrischen Stromes und nachfolgendem Ausspülen der Schadstoffe aus den Aktivkohlefasern mit einem inerten Spülgas durchgeführt wird, **gekennzeichnet durch** folgende Schritte:
a) radiales Leiten des Gases durch die Aktivkohlefaserwicklung (48), die im zusammengedrückten elektrisch leitfähigen Zustand quer zu ihrer Längserstreckung mittels einer radialen Kompression der Aktivkohlefaserwicklung (48) durch Aufschieben des äußeren Hohlkörpers (47) auf die den inneren Hohlkörper (46) umschließende Aktivkohlefaserwicklung (48) gehalten wird, wobei für den freien Gasdurchtritt die Gaseintrittsöffnungen (4) des inneren Hohlkörpers (46) einen Durchströmungsquerschnitt (Q1) von 5 bis 50% der Fläche des Mantels (50) des Hohlkörpers (46) und die Gasaustrittsöffnungen (6) des äußeren Hohlkörpers (47) einen Durchströmungsquerschnitt (Q2) von 50 bis 95% der Fläche des Mantels (54) des äußeren Hohlkörpers (47) aufweisen,
b) Bilden des Stromkreises zwischen dem inneren und äußeren Hohlkörper (46,47) sowie der komprimierten Aktivkohlefaserwicklung (48), in der die Aktivkohlefasern der Aktivkohlefaserwicklung (48) beim Aufheizen zur Desorption der Schadstoffe vom Strom quer zu ihrer Längserstreckung radial von innen nach außen durchflossen werden und als Widerstand geschaltet sind.

16. Verfahren nach Anspruch 15, **dadurch gekennzeichnet, dass** als Adsorptionsmodul (45) ein Aktivkohlefasermodul (45_{(a...n)}) verwendet wird, das mit Gleichstrom oder niederfrequenten Wechselstrom beaufschlagt wird.

17. Verfahren nach Anspruch 16, **dadurch gekennzeichnet, dass** das Aktivkohlefasermodul (45_{(a...n)}) durch folgende Schritte hergestellt wird:
a) Rundbiegen und Fügen des metallischen schlitz-, sieb-, lochblech- oder gitterartigen Materials zu einem inneren und einem äußeren zylinderförmigen Hohlkörper (46,47) mit aufeinander abgestimmten unterschiedlichen Durchmessern des Aktivkohlefasermoduls,
b) Umwickeln des inneren Hohlkörpers (46) mit mindestens einer Wickellage (48) aus einer Aktivkohlefasermatte und deren Befestigung, wobei die Konfektionsbreite (KB) der Aktivkohlefasermatte (7) die axiale Länge (L) des Aktivkohlefasermoduls (45_{(a...n)}) bestimmt,
c) radiales Komprimieren der Aktivkohlefaserwicklung (48) durch axiales Aufschieben des äußeren Hohlkörpers (47) auf die Aktivkohlefaserwicklung (48), wobei der äußere Hohlkörper (47) einen Innendurchmesser (ID) aufweist, der gegenüber dem Außendurchmesser (AD) der Aktivkohlefaserwicklung (48) um das 0,01- bis 0,4-fache geringer ist, so dass die Aktivkohlefaserwicklung (48) radial zusammengedrückt und in einem dichten elektrisch leitfähigen Zustand auch in Querrichtung der Fasern gehalten ist.

18. Verfahren nach Anspruch 15, **dadurch gekennzeichnet, dass** als metallisches Material für die inneren und äußeren Hohlkörper (46,47) in Abhängigkeit der an den Aktivkohlefasern adsorbierten Schadstoffe aus der Gruppe Kupfer, Aluminium, Magnesium und deren Legierungen, Eisen oder unlegierte Stähle, Edelstähle, Nickelbasislegierungen, Titan bzw. Titanlegierungen verwendet wird.

19. Verfahren nach Anspruch 15, **dadurch gekennzeichnet, dass** der Adsorptionsapparat zur Regeneration der mit Schadstoffen beladenen Aktivkohlefasern in den Modulen zunächst mit Stickstoff zum Inertisieren auf einen Überdruck von 0,1 bis 1,0 bar aufgedrückt und anschließend wieder entspannt wird, dann das Aufdrücken und Entspannen mehrfach wiederholt wird, bis der Sauerstoffgehalt im Adsorptionsapparat auf <5% abgesunken ist, und dass anschließend zur Desorption der Schadstoffe die Aktivkohlefasern durch Einschalten des Stromkreises aufgeheizt und mit einem Spülgas gespült werden, wobei das Spülen und Aufheizen auch in Intervallen durchgeführt werden kann.

20. Verfahren nach Anspruch 15, **dadurch gekennzeichnet, dass** als Spülgas inertes Gas, vorzugsweise Stickstoff, verwendet wird.

## Claims

1. A device for treating a gas contaminated with pollutants with at least one adsorption module (45) inserted in an adsorption apparatus (70) for adsorbing the pollutants, wherein the adsorption module (45) comprises an inner cylindrical hollow body (46) provided with gas inlet openings (4) and made of an electrically conductive material, an outer cylindrical hollow body (47) provided with gas outlet openings (6) and made of an electrically conductive material, and an electrically conductive activated carbon fibre winding (48) which is arranged around the inner hollow body (46) and enclosed by the outer hollow body (47), wherein the inner hollow body (46) is closed in pressure- and gas-tight manner at the foot end with a bottom plate (49) which is welded to a jacket (50) of the hollow body (46) at the bottom end face (51) thereof and thus forms a treatment portion (52) in the hollow body (46), with an electrical circuit (17) for heating the activated carbon fibre winding (48) to desorb the adsorbed pollutants and which is formed between the inner and outer hollow bodies (46, 47), wherein the inner and outer hollow bodies (46, 47) are electrically insulated from one another and connected to a voltage source (16), and the untreated gas flows from the treatment portion (52) defined by the inner hollow body (46) from the inside to the outside through the activated carbon fibre winding (48), and with a distribution tube (57) having outlet openings (58) for a purge gas for inerting and purging the activated carbon fibre winding (48), wherein the distribution tube (57) is guided along the longitudinal axis (LA) of the activated carbon fibre module (45) in the treatment portion (52) until close to the bottom plate (49) of the activated carbon fibre module (45) and is closed at its bottom end facing the bottom plate (49), **characterised in that** the activated carbon fibre winding (48) is held in a radially compressed, dense electrically conductive state by radial compression, in which the compressed activated carbon fibre winding (48) has current flowing through it transversely of its longitudinal extent, and is connected as a resistor, wherein, for radial compression of the activated carbon fibre winding (48), the outer hollow body (46) has an internal diameter (ID) which is 0.01 to 0.4 times smaller than the external diameter (AD) of the activated carbon fibre winding (48), and **in that**, for free passage of gas transversely of the longitudinal axis (LA) of the inner hollow body (46), the gas inlet openings (4) are distributed uniformly over the jacket (50) of the inner cylindrical hollow body (46), wherein the gas inlet openings (4) correspond to a flow cross-section (Q1) of 5 to 80% of the area of the jacket (50) of the inner hollow body (46), and **in that**, for free passage of gas transversely of the longitudinal axis (LA) of the outer cylindrical hollow body (47), the gas outlet openings (6) are distributed uniformly over the jacket (54) of the outer cylindrical hollow body (47), wherein the gas outlet openings (6) correspond to a flow cross-section (Q2) of 50 to 95% of the area of the jacket (54) of the outer hollow body (47).

2. A device according to Claim 1, **characterised in that** the inner and outer hollow bodies (46, 47) consist of a metallic slotted, screen-like, perforated sheet-like or grid-like material which, depending on the pollutants adsorbed onto the activated carbon fibres, is selected from the group copper, aluminium, magnesium and the alloys thereof, iron or unalloyed steels, special steels, nickel-based alloys, titanium or titanium alloys.

3. A device according to Claim 1, **characterised in that** the inner and outer hollow bodies (46, 47) are electrically non-conductively fastened to a holder (23) or receptacle base (56) in the adsorption apparatus (70).

4. A device according to Claim 1, **characterised in that** the inner hollow body (46) has a terminal (12) for one pole (15) and the outer hollow body (47) a terminal (13) for the other pole (14) of the voltage source (16), wherein the voltage source (16) is a DC voltage source having a potential difference between the poles (14, 15) which is selected between 10 V and 400 V depending on the thickness (d) of the activated carbon fibre winding (48) and the desorption temperature of the pollutants adsorbed onto the activated carbon fibres.

5. A device according to Claim 1, **characterised in that** the inner and outer hollow bodies (46, 47) are connected to the AC source (16), the voltage and frequency of which is adapted, depending on the thickness (d) of the activated carbon fibre winding (48), to the desorption temperature of the pollutants adsorbed onto the activated carbon fibres.

6. A device according to Claim 3 or 4, **characterised in that** the terminals (12, 13) are connected to DC or AC source (16) via self-supporting connecting leads (44, 66, 67) which are guided in gas- and pressure-tight and electrically insulated manner through the bottom plate (49) of the inner hollow body (46) of the activated carbon fibre module (45_{(a...n)}) and the container jacket (77) of the adsorption apparatus (70), and which, on throughflow of the pollutant-laden gas during adsorption the pollutants onto the activated carbon fibres, are connected via switch (68) to the earth of the adsorption apparatus (70) in order to discharge an electrostatic charge and which, on desorption of the adsorbed pollutants, are electrically isolated from the earth by the switch (68).

7. A device according to Claim 5, **characterised in that** the outer hollow body (47) of the activated carbon fibre module (45_{(a...n)}) is enclosed by an inductor for generating a high-frequency magnetic field to heat the activated carbon fibre winding (48), which inductor is connected to the AC voltage source (16).

8. A device according to Claim 1, **characterised in that** the activated carbon fibre winding (48) is formed from 3 to 300 plies of a woven activated carbon fibre fabric with a fibre diameter of 6 to 50 µm and a fibre length of 3 to 200 mm.

9. A device according to Claim 8, **characterised in that** the woven activated carbon fibre fabric has a fabrication width (KB) corresponding to the axial length (L) of the inner or outer hollow body (46, 47).

10. A device according to Claim 9, **characterised in that** a plurality of wound fabrication widths (KB) which have been pushed onto one another are joined together as a complete winding and together have an axial length corresponding to the product of the fabrication width (KB) and the number of joined together windings, and **in that** uncontrollable and nonuniform gas throughput is prevented with a tape strip (69) at the abutting edges thereof.

11. A device according to Claim 9, **characterised in that**, in the case of hollow bodies (46, 47) with an axial length (L) smaller than the fabrication width (KB), the activated carbon fibre winding (48) consists of at least two, preferably three, plies wound crosswise around the inner hollow body (46).

12. A device according to Claim 1, **characterised in that** the activated carbon fibre winding (48) held between the hollow bodies (46, 47) is replaceable.

13. A device according to Claim 1, **characterised in that** a plurality of activated carbon fibre modules (45_{(a...n)}) are held in a gas- and pressure-tight and electrically non-conductive manner in a triangular or rectangular arrangement on, and fastened in, a receptacle base (56) which is oriented perpendicularly to the longitudinal axis (LB) of the adsorption apparatus (70), wherein the inner and outer hollow bodies (46, 47) of the activated carbon fibre modules (45_{(a...n)}) are electrically insulated from one another and in each case enclose a treatment portion (52), in which the distribution tube (57) is in each case guided along the longitudinal axis (LA) of the activated carbon fibre module (45_{(a...n)}) until close to the bottom plate (49) of the inner hollow body (46) of the activated carbon fibre module (45_{(a...n)}).

14. A device according to Claim 13, **characterised in that** the gas inlet port (73, 74) into the adsorption apparatus (70) is oriented horizontally towards the inlet region (32) of the activated carbon fibre modules (45_{(a...n)}) and the gas outlet port (75, 76) out of the adsorption apparatus (70) is oriented opposite the gas inlet port (73, 74), wherein the outlet port (78) for the desorbate is arranged on the lower container jacket of the adsorption apparatus (70).

15. A method for treating a gas contaminated with pollutants in a device according to Claim 1, in which at least one adsorption module (45) arranged within an adsorption apparatus (70) which comprises an inner cylindrical hollow body (46) provided with gas inlet openings (3) and made of an electrically conductive material, an outer cylindrical hollow body (47) provided with gas outlet openings (6) and made of an electrically conductive material, and an electrically conductive activated carbon fibre winding (48), is supplied with the gas and the gas from the treatment portion (52) defined by the inner hollow body (46) is distributed over the axial length of the module and passed from the inside to the outside through the activated carbon fibre winding (48), wherein the pollutants are adsorbed onto the activated carbon fibres of the activated carbon fibre winding (48), after which, once the activated carbon fibres have been laden with pollutants, they are regenerated by heating the activated carbon fibres by passing an electric current through them and subsequently purging the pollutants from the activated carbon fibres with an inert purge gas, **characterised by** the following steps:
a) passing the gas radially through the activated carbon fibre winding (48) which is held in the compressed electrically conductive state transversely of the longitudinal extent thereof by means of radial compression of the activated carbon fibre winding (48) by the outer hollow body (47) being pushed onto the activated carbon fibre winding (48) enclosing inner hollow body (46), wherein, for free passage of the gas, the gas inlet openings (4) of the inner hollow body (46) have a flow cross-section (Q1) of 5 to 50% of the area of the jacket (50) of the hollow body (46) and the gas outlet openings (6) of the outer hollow body (47) have a flow cross-section (Q2) of 50 to 95% of the area of the jacket (54) of the outer hollow body (47),
b) forming the circuit between the inner and outer hollow bodies (46, 47) and the compressed activated carbon fibre winding (48), in which, on heating for desorption of the pollutants, the activated carbon fibres of the activated carbon fibre winding (48) have current flowing radially through them transversely of the longitudinal extent thereof from the inside to the outside, and are connected as a resistor.

16. A method according to Claim 15, **characterised in that** an activated carbon fibre module (45_{(a...n)}) which is supplied with direct current or a low-frequency alternating current is used as the adsorption module (45).

17. A method according to Claim 16, **characterised in that** the activated carbon fibre module (45_{(a...n)}) is manufactured by the following steps:
a) bending and joining the metallic slotted, screen-like, perforated sheet-like or grid-like material to form an inner and an outer cylindrical hollow body (46, 47) with mutually coordinated, different diameters of the activated carbon fibre module,
b) winding the inner hollow body (46) with at least one winding ply (48) of an activated carbon fibre mat and fastening it, wherein the fabrication width (KB) of the activated carbon fibre mat (7) corresponds to the axial length (L) of the activated carbon fibre module (45_{(a...n)}),
c) radially compressing the activated carbon fibre winding (48) by the outer hollow body (47) being pushed axially onto the activated carbon fibre winding (48), wherein the outer hollow body (47) has an internal diameter (ID) which is 0.01 to 0.4 times smaller than the external diameter (AD) of the activated carbon fibre winding (48), such that the activated carbon fibre winding (48) is radially compressed and held also in the transverse direction of the fibres in a dense, electrically conductive state.

18. A method according to Claim 15, **characterised in that**, depending on the pollutants adsorbed onto the activated carbon fibres, the metallic material used for the inner and outer hollow bodies (46, 47) is from the group copper, aluminium, magnesium and the alloys thereof, iron or unalloyed steels, special steels, nickel-based alloys, titanium or titanium alloys.

19. A method according to Claim 15, **characterised in that**, for regenerating the activated carbon fibres laden with pollutants in the modules, the adsorption apparatus is firstly pressurised to an overpressure of 0.1 to 1.0 bar with nitrogen for inerting, after which it is depressurised again, then pressurisation and depressurisation are repeated a number of times until the oxygen content in the adsorption apparatus has dropped to <5%, and **in that**, for desorption of the pollutants, the activated carbon fibres are then heated by switching on the electric circuit and purging with a purge gas, wherein purging and heating can also be carried out at intervals.

20. A method according to Claim 15, **characterised in that** an inert gas, preferably nitrogen, is used as the purge gas.

## Revendications

1. Dispositif pour le traitement d'un gaz chargé de substances nocives avec au moins un module d'adsorption (45), utilisé dans un appareil d'adsorption (70), pour l'adsorption des substances nocives, dans lequel le module d'adsorption (45) comporte un corps creux cylindrique interne (46) en matériau électriquement conducteur, pourvu d'orifices d'entrée de gaz (4), un corps creux cylindrique externe (47) en matériau électriquement conducteur, pourvu d'orifices de sortie de gaz (6), et un enroulement de fibres de carbone actif électriquement conducteur (48), lequel est disposé autour du corps creux interne (46) et est entouré par le corps creux externe (47), dans lequel le corps creux interne (46) est obturé du côté pied de manière étanche à la pression et aux gaz par une tôle de fond (49), laquelle est soudée à une enveloppe (50) du corps creux (46) au niveau de sa face frontale côté fond (51) et forme ainsi une section de traitement (52) dans le corps creux (46), avec un circuit électrique (17) pour le chauffage de l'enroulement de fibres de carbone actif (48) pour la désorption des substances nocives adsorbées, lequel circuit est formé entre les corps creux interne et externe (46, 47), dans lequel les corps creux interne et externe (46, 47) sont électriquement isolés l'un de l'autre et raccordés à une source de tension (16), et le gaz non traité circule depuis la section de traitement (52) définie par le corps creux interne (46) de l'intérieur vers l'extérieur à travers l'enroulement de fibres de carbone actif (48), et avec un tube de distribution (57) comprenant des orifices de sortie (58) pour un gaz de rinçage pour l'inertisation et le rinçage de l'enroulement de fibres de carbone actif (48), dans lequel le tube de distribution (57) est guidé le long de l'axe longitudinal (LA) du module de fibres de carbone actif (45) dans la section de traitement (52) jusqu'à proximité de la tôle de fond (49) du module de fibres de carbone actif (45) et obturé à son extrémité tournée vers la tôle de fond (49), **caractérisé en ce que** l'enroulement de fibres de carbone actif (48) est maintenu dans un état électriquement conducteur dense compressé radialement par compression radiale, dans lequel l'enroulement de fibres de carbone actif (48) comprimé est parcouru par le courant transversalement à son étendue longitudinale et branché en tant que résistance, dans lequel pour la compression radiale de l'enroulement de fibres de carbone actif (48), le corps creux externe (46) présente un diamètre interne (ID) qui est inférieur de 0,01 à 0,4 fois par rapport au diamètre externe (AD) de l'enroulement de fibres de carbone actif (48), et **en ce que** pour le passage libre de gaz transversalement à l'axe longitudinal (LA) du corps creux interne (46), les orifices d'entrée de gaz (4) sont répartis uniformément sur l'enveloppe (50) du corps creux cylindrique interne (46), dans lequel les orifices d'entrée de gaz (4) correspondent à une section transversale de traversée (Q1) de 5 à 80 % de la surface de l'enveloppe (50) du corps creux interne (46), et **en ce que** pour la sortie libre de gaz transversalement à l'axe longitudinal (LA) du corps creux cylindrique externe (47), les orifices de sortie de gaz (6) sont répartis uniformément sur l'enveloppe (54) du corps creux cylindrique externe (47), dans lequel les orifices de sortie de gaz (6) correspondent à une section transversale de traversée (Q2) de 50 à 95 % de la surface de l'enveloppe (54) du corps creux externe (47).

2. Dispositif selon la revendication 1, **caractérisé en ce que** les corps creux interne et externe (46, 47) consistent en un matériau métallique en forme de fente, de tamis, de tôle perforée ou de grille, lequel est sélectionné en fonction des substances nocives adsorbées sur les fibres de carbone actif dans le groupe du cuivre, de l'aluminium, du magnésium et de leurs alliages, du fer ou des aciers non alliés, des aciers inoxydables, des alliages à base de nickel, du titane ou des alliages de titane.

3. Dispositif selon la revendication 1, **caractérisé en ce que** les corps creux interne et externe (46, 47) sont fixés de manière électriquement non conductrice à un support (23) ou fond de réception (56) dans l'appareil d'adsorption (70).

4. Dispositif selon la revendication 1, **caractérisé en ce que** le corps creux interne (46) comprend un raccordement (12) pour un pôle (15) et le corps creux externe (47) comprend un raccordement (13) pour l'autre pôle (14) de la source de tension (16), dans lequel la source de tension (16) est une source de tension continue dont la différence de potentiel entre les pôles (14, 15) est sélectionnée, en fonction de l'épaisseur (d) de l'enroulement de fibres de carbone actif (48) et de la température de désorption des substances nocives adsorbées sur les fibres de carbone actif, entre 10 V et 400 V.

5. Dispositif selon la revendication 1, **caractérisé en ce que** les corps creux interne et externe (46, 47) sont raccordés à la source de courant alternatif (16), dont la tension et la fréquence sont adaptées en fonction de l'épaisseur (d) de l'enroulement de fibres de carbone actif (48) à la température de désorption des substances nocives adsorbées sur les fibres de carbone actif.

6. Dispositif selon la revendication 3 ou la revendication 4, **caractérisé en ce que** les raccordements (12, 13) à la source de courant continu ou alternatif (16) sont connectés au moyen de lignes de connexion (44, 66, 67) autoportantes, guidées de manière étanche aux gaz et à la pression et de manière électriquement isolée à travers la tôle de fond (49) du corps creux interne (46) du module de fibres de carbone actif (45_{(a...n)}) ainsi que l'enveloppe de récipient (77) de l'appareil d'adsorption (70), lesquelles, lors de la traversée du gaz chargé de substances nocives pendant l'adsorption des substances nocives sur les fibres de carbone actif, sont commutées au moyen de commutateurs (68) à la prise de terre de l'appareil d'adsorption (70) pour la dérivation d'une charge électrostatique et, lors de la désorption des substances nocives adsorbées, sont électriquement séparées de la prise de terre par l'intermédiaire du commutateur (68).

7. Dispositif selon la revendication 5, **caractérisé en ce que** le corps creux externe (47) du module de fibres de carbone actif (45_{(a...n)}) est entouré d'un inducteur pour la production d'un champ magnétique à haute fréquence pour le réchauffage de l'enroulement de fibres de carbone actif (48), lequel inducteur est raccordé à la source de tension alternative (16).

8. Dispositif selon la revendication 1, **caractérisé en ce que** l'enroulement de fibres de carbone actif (48) est formé de 3 à 300 couches à partir d'un tissu de fibres de carbone actif avec un diamètre de fibre de 6 à 50 µm, une longueur de fibre de 3 à 200 mm.

9. Dispositif selon la revendication 8, **caractérisé en ce que** le tissu de fibres de carbone actif a une largeur de confection (KB) qui correspond à la longueur axiale (L) du corps creux interne ou externe (46, 47).

10. Dispositif selon la revendication 9, **caractérisé en ce que** plusieurs largeurs de confection (KB) poussées les unes contre les autres, enroulées, sont accolées les unes aux autres en tant qu'enroulement global, lesquelles présentent conjointement une longueur axiale qui correspond au produit de la largeur de confection (KB) et du nombre des enroulements accolés les uns aux autres, et **en ce qu'**un débit de gaz incontrôlable et non uniforme est empêché au niveau de leurs rebords par un ruban (69).

11. Dispositif selon la revendication 9, **caractérisé en ce que** dans les corps creux (46, 47) avec une longueur axiale (L) plus petite par rapport à la largeur de confection (KB), l'enroulement de fibres de carbone actif (48) consiste en au moins deux, de préférence trois, couches enroulées de manière croisée autour du corps creux interne (46).

12. Dispositif selon la revendication 1, **caractérisé en ce que** l'enroulement de fibres de carbone actif (48) maintenu entre les corps creux (46, 47) est échangeable.

13. Dispositif selon la revendication 1, **caractérisé en ce que** plusieurs modules de fibres de carbone actif (45_{(a...n)}) sont maintenus en division triangulaire ou quadrangulaire, de manière étanche aux gaz et à la pression ainsi que de manière électriquement non conductrice, sur un fond de réception (56) fixé en dernier, orienté perpendiculairement à l'axe longitudinal (LB) de l'appareil d'adsorption (70), dans lequel les corps creux interne et externe (46, 47) des modules de fibres de carbone actif (45_{(a...n)}) sont électriquement isolés l'un de l'autre et incluent respectivement une section de traitement (52), dans laquelle respectivement le tube de distribution (57) est guidé le long de l'axe longitudinal (LA) du module de fibres de carbone actif (45_{(a...n)}) jusqu'à proximité de la tôle de fond (49) du corps creux interne (46) du module de fibres de carbone actif (45_{(a...n)}).

14. Dispositif selon la revendication 13, **caractérisé en ce que** la tubulure d'entrée de gaz (73, 74) est orientée dans l'appareil d'adsorption (70) horizontalement en direction de la zone d'entrée (32) des modules de fibres de carbone actif (45_{(a...n)}) et la tubulure de sortie de gaz (75, 76) est orientée à partir de l'appareil d'adsorption (70) par rapport à la tubulure d'entrée de gaz (73, 74), dans lequel la tubulure de sortie (78) pour le produit désorbé est disposée sur l'enveloppe de récipient inférieure de l'appareil d'adsorption (70).

15. Procédé pour le traitement d'un gaz chargé de substances nocives dans un dispositif selon la revendication 1, dans lequel au moins un module d'adsorption (45) disposé à l'intérieur d'un appareil d'adsorption (70), lequel module d'adsorption comporte un corps creux cylindrique interne (46) en matériau électriquement conducteur, pourvu d'orifices d'entrée de gaz (3), un corps creux cylindrique externe (47) en matériau électriquement conducteur, pourvu d'orifices de sortie de gaz (6), et un enroulement de fibres de carbone actif électriquement conducteur (48), est exposé au gaz, et le gaz est distribué à partir de la section de traitement (52) définie par le corps creux interne (46) sur la longueur axiale du module et acheminé de l'intérieur vers l'extérieur à travers l'enroulement de fibres de carbone actif (48), dans lequel l'adsorption des substances nocives s'effectue sur les fibres de carbone actif de l'enroulement de fibres de carbone actif (48), puis la régénération des fibres de carbone actif après leur chargement en substances nocives au moyen d'un chauffage des fibres de carbone actif par mise en place du passage d'un courant électrique et rinçage subséquent des substances nocives des fibres de carbone actif avec un gaz de rinçage inerte est mise en œuvre, **caractérisé par** les étapes suivantes :
a) acheminement radial du gaz à travers l'enroulement de fibres de carbone actif (48), lequel est maintenu dans l'état électriquement conducteur compressé transversalement à son étendue longitudinale au moyen d'une compression radiale de l'enroulement de fibres de carbone actif (48) par repoussement du corps creux externe (47) sur l'enroulement de fibres de carbone actif (48) entourant le corps creux interne (46), dans lequel pour le passage libre de gaz, les orifices d'entrée de gaz (4) du corps creux interne (46) présentent une section transversale de traversée (Q1) de 5 à 50 % de la surface de l'enveloppe (50) du corps creux (46) et les orifices de sortie de gaz (6) du corps creux externe (47) présentent une section transversale de traversée (Q2) de 50 à 95 % de la surface de l'enveloppe (54) du corps creux externe (47),
b) formation du circuit entre les corps creux interne et externe (46, 47) ainsi que de l'enroulement de fibres de carbone actif (48) comprimé, dans lequel les fibres de carbone actif de l'enroulement de fibres de carbone actif (48), lors du chauffage pour la désorption des substances nocives, sont parcourues par le courant transversalement à leur étendue longitudinale, radialement de l'intérieur vers l'extérieur, et branchées en tant que résistance.

16. Procédé selon la revendication 15, **caractérisé en ce qu'**en tant que module d'adsorption (45) est utilisé un module de fibres de carbone actif (45_{(a...n)}) qui est exposé à un courant continu ou à un courant alternatif à basse fréquence.

17. Procédé selon la revendication 16, **caractérisé en ce que** le module de fibres de carbone actif (45_{(a...n)}) est produit par les étapes suivantes :
a) cintrage et assemblage du matériau métallique en forme de fente, de tamis, de tôle perforée ou de grille à des corps creux cylindriques interne et externe (46, 47) avec des diamètres différents coordonnés du module de fibres de carbone actif,
b) enveloppement du corps creux interne (46) avec au moins une couche d'enroulement (48) d'un mat de fibres de carbone actif et leur fixation, dans lequel la largeur de confection (KB) du mat de fibres de carbone actif (7) détermine la longueur axiale (L) du module de fibres de carbone actif (45_{(a...n)}),
c) compression radiale de l'enroulement de fibres de carbone actif (48) par repoussement axial du corps creux externe (47) sur l'enroulement de fibres de carbone actif (48), dans lequel le corps creux externe (47) présente un diamètre interne (ID) qui est inférieur de 0,01 à 0,4 fois par rapport au diamètre externe (AD) de l'enroulement de fibres de carbone actif (48), de telle sorte que l'enroulement de fibres de carbone actif (48) soit maintenu de manière radialement compressée et dans un état électriquement conducteur dense également dans la direction transversale des fibres.

18. Procédé selon la revendication 15, **caractérisé en ce qu'**en tant que matériau métallique pour les corps creux interne et externe (46, 47), il est utilisé un élément sélectionné en fonction des substances nocives adsorbées sur les fibres de carbone actif dans le groupe du cuivre, de l'aluminium, du magnésium et de leurs alliages, du fer ou des aciers non alliés, des aciers inoxydables, des alliages à base de nickel, du titane ou des alliages de titane.

19. Procédé selon la revendication 15, **caractérisé en ce que** l'appareil d'adsorption, pour la régénération des fibres de carbone actif chargées de substances nocives dans les modules, est tout d'abord mis sous pression avec de l'azote pour l'inertisation à une surpression de 0,1 à 1,0 bar et ensuite à nouveau détendu, puis la mise sous pression et la détente sont répétées plusieurs fois, jusqu'à ce que la teneur en oxygène dans l'appareil d'adsorption soit descendue à < 5 %, et **en ce qu'**ensuite, pour la désorption des substances nocives, les fibres de carbone actif sont chauffées par mise en marche du circuit et rincées avec un gaz de rinçage, dans lequel le rinçage et le chauffage peuvent être mis en œuvre également à intervalles.

20. Procédé selon la revendication 15, **caractérisé en ce qu'**en tant que gaz de rinçage, il est utilisé un gaz inerte, de préférence l'azote.
